# EUROPEAN PATENT APPLICATION

(11) **EP 4 742 556 A1**
(43) Date of publication of application: **13.05.2026**
(21) Application number: 23944582.8
(22) Date of filing: 07.07.2023
(51) Int. Cl.: H04B 7/185

(54) **WIRELESS COMMUNICATION METHOD, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Penza, Giancarlo
(86) International application number: PCT/CN2023/106427
(87) International publication number: WO 2025/010559

(57) **Abstract**

Provided in the embodiments of the present application are a wireless communication method, a communication device, and a storage medium. The method comprises: a terminal device receiving first indication information, which is used for determining that a first satellite successfully receives mobile-originated (MO) data sent by the terminal device, wherein the MO data is transmitted by using a storage and forwarding mode of the first satellite; and the terminal device caching the MO data, wherein the cached MO data is cleared away in the following cases: the terminal device determining that the MO data is successfully submitted to a core network and/or the cached MO data is invalid.

## Description

### TECHNICAL FIELD

Embodiments of the present disclosure relate to the technical field of mobile communication, and particularly to, methods for wireless communication, a communication device, and a storage medium.

### BACKGROUND

The Non-Terrestrial Network (NTN) provides communication services to terrestrial users in by means of satellite communication. Compared with terrestrial cellular network communication, the satellite communication has many unique advantages, such as: not restricted by users' geographical areas, a long communication distance, and high stability.

The links in the NTN network include: a feeder link that is a link used for communication between a gateway and a satellite, and a service link that is a link used for communication between a terminal and a satellite. The operation mode of a communication satellite includes a store-and-forward mode. In the store-and-forward mode, the feeder link and the service link cannot be available simultaneously.

For Mobile Originated (MO) data, after User Equipment (UE) sends the MO data to a base station, the base station delivers the MO data to a core network, and then the base station sends a response message to the UE according to the delivery result of the MO data. If the UE determines that the MO data is successfully delivered to the core network based on the response message returned from the base station, the MO data buffered in the buffer is cleared. How to regulate the behavior of the terminal device when the transmission of the MO data is performed in the store-and-forward mode is an urgent problem to be solved.

### SUMMARY

Embodiments of the present disclosure provide methods for wireless communication, a communication device, and a storage medium.

A method for wireless communication provided by the embodiment of the present disclosure includes following operations.

A terminal device receives first indication information, where the first indication information is used to determine that a first satellite successfully receives MO data sent by the terminal device, and a store-and-forward mode of the first satellite is used for transmission of the MO data.

The terminal device buffers the MO data, where the buffered MO data is cleared in following cases: the terminal device determines that the MO data is successfully delivered to a core network and/or the buffered MO data is invalid.

A method for wireless communication provided by the embodiment of the present disclosure includes following operations.

A first satellite sends first indication information to a terminal device, where the first indication information is used to determine that the first satellite successfully receives MO data sent by the terminal device, and a store-and-forward mode of the first satellite is used for transmission of the MO data; where the MO data buffered by the terminal device is cleared in following cases: the terminal device determines that the MO data is successfully delivered to a core network and/or the buffered MO data is invalid.

A method for wireless communication provided by the embodiment of the present disclosure includes following operations.

A second satellite sends second indication information to a terminal device, where the second indication information is used for the terminal device to determine that the MO data is successfully delivered to the core network and/or the buffered MO data is invalid, where the MO data buffered in the terminal device is cleared in a case where the MO data is successfully delivered to a core network and/or the buffered MO data is invalid.

The terminal device provided by the embodiment of the present disclosure includes a first communication unit and a buffering unit.

The first communication unit is configured to receive first indication information, where the first indication information is used to determine that a first satellite successfully receives MO data sent by the terminal device, and a store-and-forward mode of the first satellite is used for transmission of the MO data; and
The buffering unit is configured to buffer the MO data, where the buffered MO data is cleared in following cases: the terminal device determines that the MO data is successfully delivered to a core network and/or the buffered MO data is invalid.

The first satellite provided by the embodiment of the present disclosure includes a second communication unit.

The second communication unit is configured to send first indication information to a terminal device, where the first indication information is used to determine that the first satellite successfully receives MO data sent by the terminal device, and a store-and-forward mode of the first satellite is used for transmission of the MO data; where the MO data buffered by the terminal device is cleared in following cases: the terminal device determines that the MO data is successfully delivered to a core network and/or the buffered MO data is invalid.

The second satellite provided by the embodiment of the present disclosure includes a third communication unit.

The third communication unit is configured to send second indication information to a terminal device, where the second indication information is used for the terminal device to determine that the MO data is successfully delivered to the core network and/or the buffered MO data is invalid, where the MO data buffered in the terminal device is cleared in a case where the MO data is successfully delivered to a core network and/or the buffered MO data is invalid.

The communication device provided by the embodiment of the present disclosure may be the terminal device in the aforementioned solution, or may be the first satellite or the second satellite in the aforementioned solution. The communication device includes a processor and a memory. The memory is configured to store a computer program, and the processor is configured to invoke and execute the computer program stored in the memory to perform the aforementioned method for wireless communication.

The chip provided by the embodiment of the present application is configured to implement the aforementioned method for wireless communication.

Specifically, the chip includes a processor configured to invoke and execute a computer program from a memory, to enable a device on which the chip is mounted to perform the aforementioned method for wireless communication.

The computer-readable storage medium provided by the embodiment of the present disclosure is configured to store a computer program that causes a computer to perform the aforementioned method for wireless communication.

The computer program product provided by the embodiment of the present disclosure includes computer program instructions that cause a computer to perform the aforementioned method for wireless communication.

The computer program provided by the embodiment of the present disclosure, when executed on a computer, causes the computer to perform the aforementioned method for wireless communication.

According to the above technical solution, after the terminal device sends the MO data to the first satellite in the store-and-forward mode, the terminal device receives the first indication information sent by the first satellite; and determines, based on the first indication information, that the first satellite successfully receives the MO data sent by the terminal device. After receiving the first indication information, the terminal device buffers the MO data, so that the terminal device continues to buffer the sent MO data in a case where it is determined that the sent MO data is successfully sent to the first satellite using the store-and-forward mode, until it is determined that the MO data is successfully delivered to the core network or the MO data is invalid, the buffered MO data is cleared. The terminal device does not need to monitor the downlink channel in a procedure of the first satellite successfully delivering the MO data to the core network, thereby balancing the requirement of power saving of the terminal while ensuring reliability of the data transmission.

### BRIEF DESCRIPTION OF THE DRAWINGS

The accompanying drawings illustrated herein are used to provide further understanding of the disclosure and constitute a part of the disclosure, and illustrative embodiments of the disclosure and their description are used to explain the disclosure instead of constituting improper limitation to the disclosure. In the accompanying drawings:
FIG. 1 is a schematic diagram of an application scenario of an embodiment of the present disclosure;
FIG. 2 is a schematic diagram of an architecture of another communication system according to an embodiment of the present disclosure;
FIG. 3 is a schematic diagram of an architecture of another communication system according to an embodiment of the present disclosure;
FIG. 4 is a schematic diagram of a NTN scenario based on a transparent payload satellite according to an embodiment of the present disclosure;
FIG. 5 is a schematic diagram of a NTN scenario based on a regenerative payload satellite according to an embodiment of the present disclosure;
FIG. 6 is an optional schematic structural diagram of an NTN system according to an embodiment of the present disclosure;
FIG. 7 is an optional schematic structural diagram of an NTN system according to an embodiment of the present disclosure;
FIG. 8 is an optional flowchart of a method for wireless communication according to an embodiment of the present disclosure;
FIG. 9 is an optional flowchart of a method for wireless communication according to an embodiment of the present disclosure;
FIG. 10 is an optional flowchart of a method for wireless communication according to an embodiment of the present disclosure;
FIG. 11 is an optional flowchart of a method for wireless communication according to an embodiment of the present disclosure;
FIG. 12 is an optional flowchart of a method for wireless communication according to an embodiment of the present disclosure;
FIG. 13 is an optional flowchart of a method for wireless communication according to an embodiment of the present disclosure;
FIG. 14 is an optional flowchart of a method for wireless communication according to an embodiment of the present disclosure;
FIG. 15 is an optional flowchart of a method for wireless communication according to an embodiment of the present disclosure;
FIG. 16 is an optional flowchart of a method for wireless communication according to an embodiment of the present disclosure;
FIG. 17 is an optional schematic structural diagram of a terminal device according to an embodiment of the present disclosure;
FIG. 18 is an optional structural diagram of a first satellite according to an embodiment of the present disclosure;
FIG. 19 is an optional structural diagram of a second satellite according to an embodiment of the present disclosure;
FIG. 20 is a schematic structural diagram of a communication device according to an embodiment of the present disclosure;
FIG. 21 is a schematic structural diagram of a chip according to an embodiment of the present disclosure; and
FIG. 22 is a schematic block diagram of a communication system according to an embodiment of the present disclosure.

### DETAILED DESCRIPTION

The technical solutions of the embodiments of the present disclosure will be described in conjunction with the accompanying drawings in the embodiments of the present disclosure. It is apparent that the described embodiments are only part of the embodiments of the present disclosure, not all the embodiments. All other embodiments obtained by those of ordinary skill in the art based on the embodiments of the present disclosure without creative efforts shall fall within the scope of protection of the present disclosure.

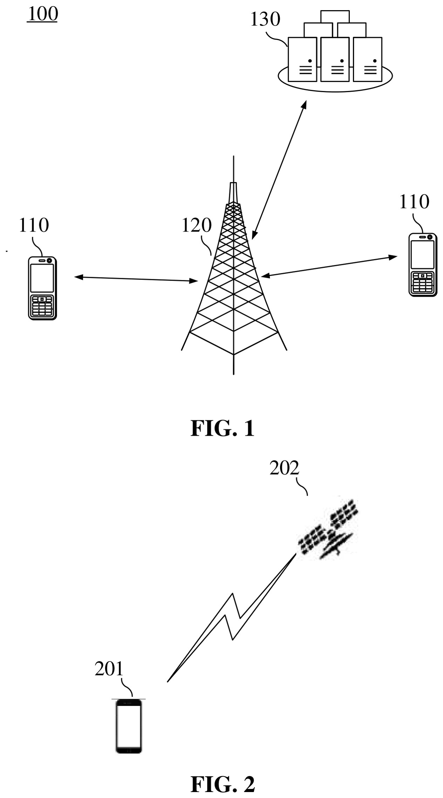

FIG. 1 is a schematic diagram of an application scenario of an embodiment of the present disclosure.

As illustrated in FIG. 1, a communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. That is to say, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5-th Generation (5G) communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., the UE) in the coverage.

The network device 120 may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

For example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to Device to Device (D2D) communication.

The wireless communication system 100 may further include a core network device 130 that communicates with the network deice 120. The core network device 130 may be a 5G core (5GC) device, such as an Access and Mobility Management Function (AMF), an Authentication Server Function (AUSF), a User Plane Function (UPF), or a Session Management Function (SMF). Optionally, the core network device 130 may also be an Evolved Packet Core (EPC) device in the LTE network, for example, a Session Management Function + Core Packet Gateway (SMF+PGW-C) device. It is to be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a Next Generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a Policy Control Function (PCF) through an NG interface 7 (abbreviated as N7).

FIG. 1 exemplarily illustrates one network device, one core network device and two terminal devices. Optionally, the wireless communication system 100 may include multiple base station devices, and another number of terminal devices may be included in the coverage of each base station device, which is not limited in the embodiments of the present disclosure.

International Standards Organization of 3rd Generation Partnership Project (3GPP) is studying the NTN technology, and the NTN generally provides communication services to terrestrial users by means of the satellite communication. Compared with the terrestrial cellular network communication, the satellite communication has many unique advantages. Firstly, the satellite communication is not restricted by users' geographical areas. For example, a general land communication cannot cover areas such as oceans, mountains, deserts, or the like where communication devices cannot be installed or areas where communication coverage is not made due to sparse population. However, for the satellite communication, since a satellite may cover a large ground area, and the satellite may move on an orbit around the earth, every corner of the earth may be theoretically covered by the satellite communication. Secondly, the satellite communication has a great social value. The satellite communication may cover remote mountainous regions and poor and backward countries or regions at a lower cost, so that people in these regions enjoy advanced voice communications and mobile Internet technologies, which is beneficial to narrow digital divide with developed regions and promote development of these regions. Thirdly, the satellite communication has a long distance, and communication cost is not increased significantly as the communication distance increases. Finally, the satellite communication has high stability and is not restricted by natural disasters.

The NTN technology may be combined with various communication systems. For example, the NTN technology may be combined with the NR system to form a NR-NTN system. For another example, the NTN technology may be combined with the IoT system to form an IoT-NTN system. By way of example, the IoT-NTN system may include a NB-IoT-NTN system and an eMTC-NTN system.

FIG. 2 is a schematic diagram of architecture of another communication system according to an embodiment of the present disclosure.

As illustrated in FIG. 2, the communication system includes a terminal device 201 and a satellite 202, and the terminal device 201 may perform the wireless communication with the satellite 202. The network formed between the terminal device 201 and the satellite 202 may also be referred to as the NTN. In the architecture of the communication system illustrated in FIG. 2, the satellite 202 may have functions of a base station and directly communicates with the terminal device 201. Under this system architecture, the satellite 202 may be called the network device. In some embodiments of the present disclosure, multiple network devices 1102 may be included in the communication system, and other numbers of terminal devices may be included within the coverage of each network device 1102, which is not limited in the embodiments of the present disclosure.

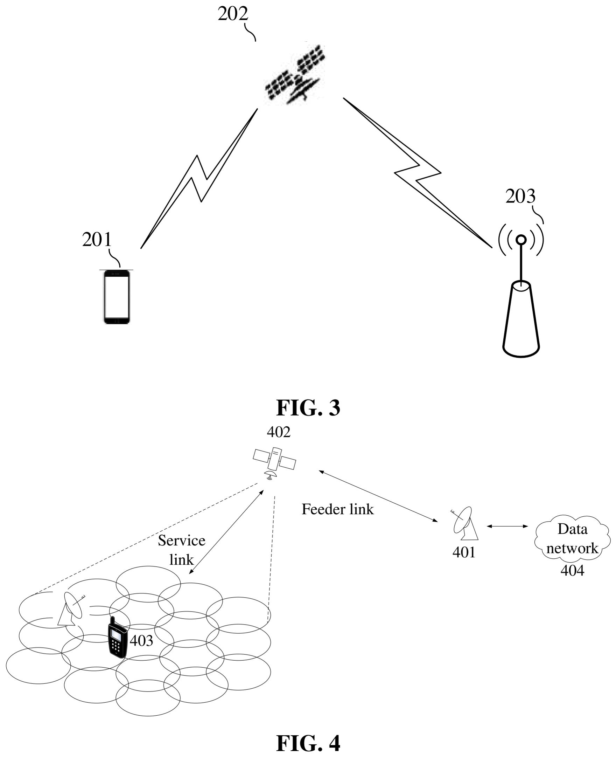

FIG. 3 is a schematic diagram of architecture of another communication system according to an embodiment of the present disclosure.

As illustrated in FIG. 3, the communication system includes a terminal device 201, a satellite 202 and a base station 203. The wireless communication may be performed between the terminal device 201 and the satellite 202, and the communication may be performed between the satellite 202 and the base station 203. The network formed between the terminal device 201, the satellite 202 and the base station 203 may also be referred to as the NTN. In the architecture of the communication system illustrated in FIG. 3, the satellite 202 may not have the functions of the base station, and the communication between the terminal device 201 and the base station 203 needs to be relayed through the satellite 202. Under this system architecture, the base station 203 may be called the network device. In some embodiments of the present disclosure, multiple base stations 203 may be included in the communication system, and other numbers of terminal devices may be included within the coverage of each base station 203, which is not limited in the embodiments of the present disclosure. The network device 203 may be the network device 120 in FIG. 1.

It is to be understood that the satellite 202 includes, but is not limited to the followings.

A Low-Earth Orbit (LEO) satellite, a Medium-Earth Orbit (MEO) satellite, a Geostationary Earth Orbit (GEO) satellite, a High Elliptical Orbit (HEO) satellite, etc. A satellite covers the ground with multiple beams. For example, one satellite may form dozens or even hundreds of beams to cover the ground. In other words, one satellite beam may cover the ground area with a diameter of tens to hundreds of kilometers, so as to ensure the coverage of the satellite and improve the system capacity of the entire satellite communication system.

As an example, the orbital altitude of LEO ranges from 500 km to 1500 km, and the corresponding orbital period is about 1.5 hours to 2 hours. The signal propagation delay of single hop communication between users is generally less than 20 ms. The maximum satellite visual time is 20 minutes. The signal propagation distance is short, the link loss is less, and the requirements for the transmit power of the terminal device is not high. The orbital altitude of GEO is 35786 km, and the rotation period around the Earth is 24 hours. The signal propagation delay of single hop communication between users is generally 250 ms.

In order to ensure the coverage of the satellite and improve the system capacity of the entire satellite communication system, the satellite covers the ground with multiple beams, and one satellite can form dozens or even hundreds of beams to cover the ground; and one satellite beam can cover the ground area with a diameter of tens to hundreds of kilometers.

It is be noted that FIG. 1 to FIG. 3 only illustrate by way of example the system to which the present disclosure applies and of course the method illustrated in the embodiment of the present disclosure may also be applied to other systems. In addition, the terms "system" and "network" herein are often used interchangeably herein. In this disclosure, the term "and/or" is only to describe an association relationship between associated objects and represents that three kinds of relationships may exist. For example, A and/or B may represent three conditions: i.e., independent existence of A, existence of both A and B and independent existence of B. Additionally, the character "/" in the present disclosure usually represents that previous and next associated objects form an "or" relationship. It is further to be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It is also to be understood that the term "correspondence" may mean that there is a direct correspondence or an indirect correspondence between the two, may also mean that there is an association relationship between the two, and may also be a relationship between indication and being indicated, configuration and being configured, etc. It is also to be understood that "predefined" or "predefined rules" may be achieved by pre-storing corresponding codes, tables or other means used for indicating relevant information in devices (e.g., including terminal devices and network devices), and the present disclosure is not limited to the specific implementation thereof. For example, predefined may refer to what is defined in the protocol. It is also to be understood that, in the embodiments of the present disclosure, the "protocol" may be a standard protocol in the communication field. For example, the protocol may include an LTE protocol, an NR protocol, and related protocols applied in future communication systems, which are not limited in the present disclosure.

According to the functions provided by the satellites, the satellites may be divided into two types: transparent payload and regenerative payload. For the transparent payload satellite, it only provides the functions of radio frequency filtering, frequency conversion and amplification, and only transparent payload of signals is provided without changing the waveform signals forwarded by the transparent payload satellite. In addition the functions of the radio frequency filtering, the frequency conversion and the amplification, the regenerative payload satellite further provides the functions of demodulation/decoding, routing/conversion, coding/modulation. The regenerative payload satellite has some or all functions of the base station.

In the NTN, the following network elements may be included: one or more gateways, a feeder link, a service link, satellites, and an inter-satellite link. The gateway is used for the communication between the satellite and the terrestrial public network, or the communication between the gNB on the satellite and the core network, or the communication between the gNB Distribution Unit (DU) on the satellite and the gNB Center Unit (CU) on the terrestrial. The feeder link is a link for the communication between the gateway and the satellite. The service link is a link for the communication between the terminal device and the satellite. According to the functions provided by the satellites, the satellites may be divided into: the transparent payload and the regenerative payload. For the transparent payload, only the functions of radio frequency filtering, frequency conversion and amplification are provided, and only transparent payload of signals is provided without changing the waveform signals forwarded by the transparent payload satellite. In addition the functions of the radio frequency filtering, the frequency conversion and the amplification, the regenerative payload further provides the functions of demodulation/decoding, routing/conversion, coding/modulation. The regenerative payload satellite has some or all functions of the base station. Herein, the inter-satellite link exists as a link for the communication between satellites in the regenerative payload network architecture.

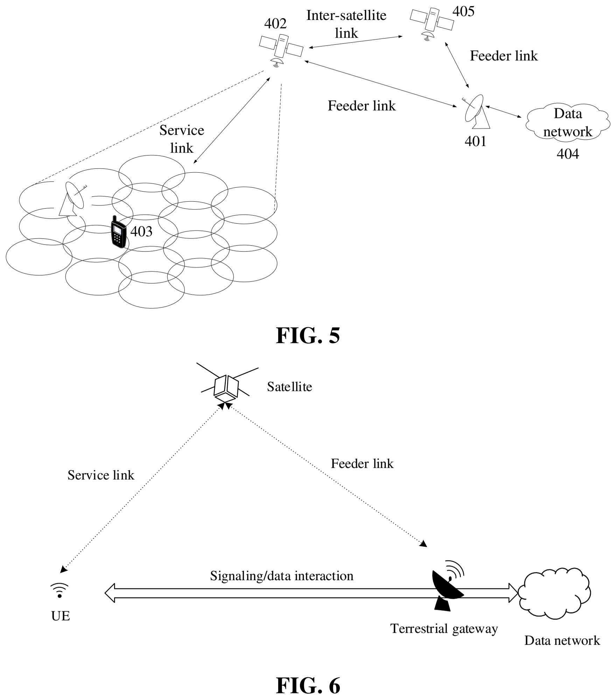

FIG. 4 and FIG. 5 illustrate schematic diagrams of a NTN scenario based on a transparent payload satellite and a NTN scenario based on a regenerative payload satellite according to an embodiment of the present disclosure.

As illustrated in FIG. 4, for the NTN scenario based on the transparent payload satellite, the gateway 401 communicates with the satellite 402 through the feeder link, and the satellite 402 communicates with the terminal 403 through the service link. The gateway 401 is connected to the data network 404. As illustrated in FIG. 5, for the NTN scenario based on the regenerative payload satellite, the satellite 402 communicates with satellite 405 through an inter-satellite link, the gateway 401 communicates with the satellite 402 or the satellite 405 through the feeder link, and the satellite 402 communicates with the terminal 403 through the service link.

In order to facilitate understanding of the technical solutions of the embodiments of the present disclosure, the technical technologies related to the embodiments of the present disclosure will be described below, and the following related technologies, as optional schemes, can be arbitrarily combined with the technical schemes of the embodiments of the present disclosure, all of which belong to the protection scope of the embodiments of the present disclosure.

With the pursuit of high rate, small delay, high-rate mobility, energy efficiency, and the diversity and complexity of services in future life, 5G is being developed for this purpose by the 3GPP. The main application scenarios of the 5G are enhanced Mobile Broadband (eMBB), Ultra-Reliable Low-Latency Communications (URLLC), and massive Machine-Type Communications (mMTC).

The NR may also be deployed independently. In the 5G network environment, a new RRC state, i.e., RRC inactive (RRC_INACTIVE) state is defined for the purpose of reducing air interface signaling, quickly resuming wireless connection and quickly resuming data traffic. The RRC_INACTIVE state is different from the RRC idle (RRC_IDLE) state and the RRC active (RRC_ACTIVE) state.

In the RRC_IDLE state, there is no RRC connection, the mobility is terminal device-based cell selection/reselection, paging is initiated by a Core Network (CN), a paging area is configured by the CN, and UE Access Stratum (AS) context does not exist at the base station side.

In the RRC_CONNECTED state, there is an RRC connection, and the base station and the terminal both have the UE AS context. The network side knows that the location of the terminal is in a specific cell level. Mobility is controlled by the network side. Unicast data may be transmitted between the terminal and the base station.

In the RRC_INACTIVE state, mobility is terminal device-based cell selection/reselection, there is a connection between a core network and a base station, there is UE AS context on a certain base station, paging is triggered by the base station, an base station-based paging area is managed by the base station, and the network side knows that the location of the terminal is in a base station-based paging area level.

3GPP is studying the NTN technology, and the NTN generally provides communication services to terrestrial users by means of the satellite communication. Compared with the terrestrial cellular network communication, the satellite communication has many unique advantages. Firstly, the satellite communication is not restricted by users' geographical areas. For example, a general land communication cannot cover areas such as oceans, mountains, deserts, or the like where communication devices cannot be installed or areas where communication coverage is not made due to sparse population. However, for the satellite communication, since a satellite may cover a large ground area, and the satellite may move on an orbit around the earth, every corner of the earth may be theoretically covered by the satellite communication. Secondly, the satellite communication has a great social value. The satellite communication may cover remote mountainous regions and poor and backward countries or regions at a lower cost, so that people in these regions enjoy advanced voice communications and mobile Internet technologies, which is beneficial to narrow digital divide with developed regions and promote development of these regions. Thirdly, the satellite communication has a long distance, and communication cost is not increased significantly as the communication distance increases. Finally, the satellite communication has high stability and is not restricted by natural disasters.

In order to ensure the coverage of the satellite and improve the system capacity of the entire satellite communication system, the satellite covers the ground with multiple beams, and one satellite can form dozens or even hundreds of beams to cover the ground; and one satellite beam can cover the ground area with a diameter of tens to hundreds of kilometers.

GPP NTN standardization studies two NTN network architectures: the transparent payload as illustrated in FIG. 4 and the regenerative payload as illustrated in FIG. 5.

The NTN network consists of the following network elements:
one or more gateways, for connecting the satellite and the terrestrial public network;
the feeder link that is the link for the communication between the gateway and the satellite;
the service link that is the link for the communication between the terminal device and the satellite;
satellites that may be divided into two types: the transparent payload and the regenerative payload according to the functions provided by the satellites,
for the transparent payload, only the functions of radio frequency filtering, frequency conversion and amplification are provided, and only transparent payload of signals is provided without changing the waveform signals forwarded by the transparent payload satellite,
for the regenerative payload, in addition the functions of the radio frequency filtering, the frequency conversion and the amplification, the functions of demodulation/decoding, routing/conversion, coding/modulation are further provided; and the regenerative payload satellite has some or all functions of the base station; and
the inter-satellite link that exists in the regenerative payload network architecture.

The store-and-forward mode of the satellite referrers to that the service link between the satellite and the service user in NTN network and the feeder link between the satellite and the ground gateway are not available simultaneously. Therefore, the satellite needs to store the transmitted data correspondingly when one link is communicated and forward the stored data when another link is communicated. In this way, the cost of terrestrial gateway deployment can be reduced and the deployment flexibility can be improved, i.e., it is not necessary to deploy the terrestrial gateway in an area close to the user. This mode is suitable for services that are less sensitive/strict to latency requirement.

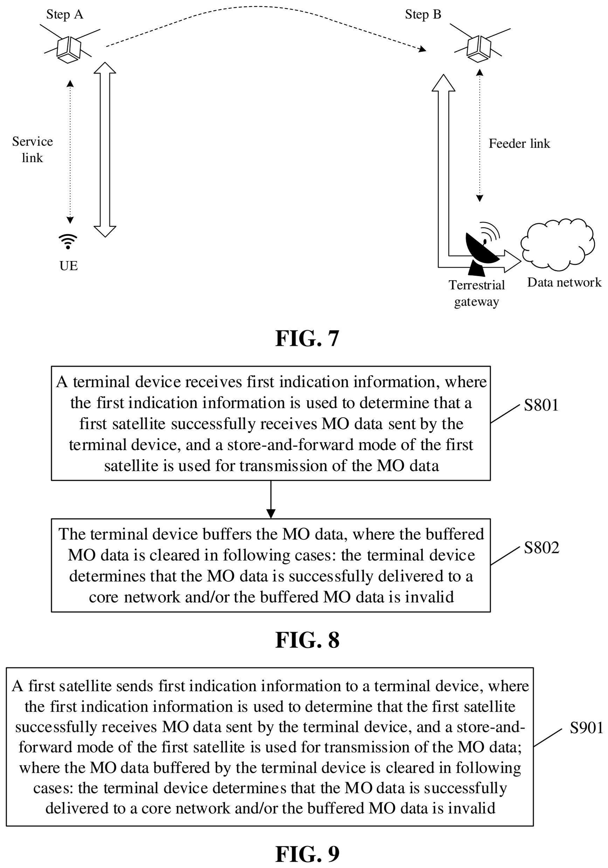

FIG. 6 and FIG. 7 are schematic diagrams of an ordinary operation mode of the satellite and a store-and-forward operation mode of the satellite, respectively.

In the ordinary operation mode of the satellite illustrated in FIG. 6, the signaling/data interaction between the UE and the terrestrial network requires that the service link and the feeder link are available simultaneously, so the end-to-end connection between the UE and the terrestrial network via the satellite is continuous.

In the store-and-forward operation mode illustrated in FIG. 7, the service link and the feeder link are not available simultaneously, and the signaling/data interaction between the UE and the terrestrial network via the satellite includes a step A and a step B.

In the step A, the signaling/data interaction is performed between the UE and the satellite through the service link. In this case, no feeder link connection is set up between the satellite and the terrestrial network. Herein, as the satellite gradually moves away from the UE, the satellite disconnects the service link with the UE.

In the step B, when the satellite flies over the terrestrial network, the satellite sets up a connection with the terrestrial network, so that the satellite communicates with the terrestrial network through the feeder link.

In the related art, for a Mobile Originated Early Data Transmission (MO-EDT) and a Mobile Originated Small Data Transmission (MO-SDT), after the UE sends the MO data to the base station, the base station delivers the MO data to the core network. Then the base station determines to send an early data completion message, an RRC release message or an RRC reject message to the UE according to whether the MO data is successfully delivered. If the UE receives the early data completion message or the RRC release message, the UE considers that the MO data is successfully delivered to the core network, and clears the MO data buffered in the buffer and continues to maintain to be in the RRC IDLE state or RRC INACTIVE state. If the UE receives the RRC reject message, the UE considers that the MO data is failed to be delivered, and the UE may re-initiate the MO-EDT and the MO-SDT. For the UE in the RRC CONNECTIVE state, after the UE sends the UL data to the base station, the base station immediately delivers the UL data to the core network.

For the satellite access system operating in the store-and-forward mode, the satellite needs to store the transmitted data accordingly when one link is communicated, and then forward the stored data when another link is communicated. For the scenario where the MO data arrives, after the UE sends the MO data of the UE to the satellite, the satellite needs to buffer the MO data firstly, and then when the satellite to flies near the ground core network and sets up the feeder link connection with the ground core network, the satellite sends the stored MO data to the core network. For the MO-EDT or the MO-SDT, based on the above procedure, after receiving the MO from the UE, the satellite has to wait at least until it flies another circle before determining which response message to be sent to the UE according to whether the MO data is successfully delivered to the CN. However, the UE needs to be in a state of monitoring the Physical Downlink Control Channel (PDCCH) all the time before receiving the response message, which is obviously not conducive to the power saving of the terminal. Similarly, for the UE in the RRC connected state, the UE cannot know in real time whether the UL data sent to the base station can be successfully delivered to the core network. Therefore, it is necessary to redesign transmission process of the MO data for the store-and-forward operation mode of the satellite, so as to balancing the requirement for the power saving of the terminal while ensuring the reliability of the data transmission.

In order to facilitate understanding of the technical solutions of the embodiments of the present disclosure, the technical solutions of the present disclosure will be described in detail by specific embodiments below. The aforementioned relevant technology as optional solutions may be combined with the technical solutions of the embodiments in any way, and shall fall within the scope of protection of the disclosure. The embodiments of the present disclosure include at least some of the following.

The method for wireless communication provided by the embodiment of the present disclosure, as illustrated in FIG. 8, is applied to a terminal device and includes following operation S801 to operation S802.

In operation S801, a terminal device receives first indication information, where the first indication information is used to determine that a first satellite successfully receives MO data sent by the terminal device, and a store-and-forward mode of the first satellite is used for transmission of the MO data.

In operation S802, the terminal device buffers the MO data, where the buffered MO data is cleared in following cases: the terminal device determines that the MO data is successfully delivered to a core network and/or the buffered MO data is invalid.

The method for wireless communication provided by the embodiment of the present disclosure, as illustrated in FIG. 9, is applied to a first device and includes following operation S901.

In operation S901, a first satellite sends first indication information to a terminal device, where the first indication information is used to determine that the first satellite successfully receives MO data sent by the terminal device, and a store-and-forward mode of the first satellite is used for transmission of the MO data; where the MO data buffered by the terminal device is cleared in following cases: the terminal device determines that the MO data is successfully delivered to a core network and/or the buffered MO data is invalid.

Hereinafter, the methods for wireless communication illustrated in FIG. 8 and FIG. 9 will be described.

If the terminal device is located within the coverage of the first satellite, i.e., the first satellite is a serving satellite of the terminal device, and a service link between the terminal device and the first satellite is available. The terminal device sends the MO data to the first satellite through the first service link with the first satellite.

The terminal device may be in one of the following states: the RRC IDLE, the RRC INACTIVE, and the RRC_CONNECTED. If the terminal device is in the RRC IDLE state or the RRC INACTIVE state, the MO data sent by the terminal device may include one of the followings: the MO-EDT and the MO-SDT. It is to be understood that if the MO data sent by the terminal device includes the MO-EDT, the terminal device may access the eMTC system or the NB-IoT system. If the MO data sent by the terminal device includes the MO-SDT, the terminal device may access the NR system.

In the embodiment of the present disclosure, the system that is accessed by the terminal device includes, but is not limited to, the eMTC system, the NB-IoT system, and the NR system. The type of the MO data sent by the terminal device varies depending on the system that is accessed.

After receiving the MO data sent by the terminal device, the first satellite sends first indication information to the terminal device through a first service link with the terminal device. The first indication information is used to indicate that the first satellite successfully receives the MO data sent by the terminal device.

In the embodiment of the present disclosure, when the first satellite operates in the store-and-forward mode, the first service link between the first satellite and the terminal device and the first feeder link between the first satellite and the core network are not available simultaneously. In the case where the first satellite receives the MO data of the terminal device through the first service link, the first feeder link is not available, and the first satellite stores the received MO data.

In the case where the first feeder link between the first satellite and the core network is available, the stored MO data is sent to the core network through the available first feeder link to complete the delivery of the MO data to the core network.

In the embodiment of the present disclosure, the first satellite may have or may not have the functions of the base station.

The terminal device considers that the first satellite successfully receives the MO data sent by the terminal device when receiving the first indication information. In this case, the terminal device does not clear the MO data in the buffer, but continues to buffer the MO data until the terminal device determines that the MO data is successfully delivered to the core network and/or the buffered MO data is invalid. It is to be understood that the MO data sent by the terminal device continues to be buffered in the case where it is determined that the MO data is successfully received by the first satellite until it is determined that the MO data is successfully delivered to the core network and/or the buffered MO data is invalid.

It is to be understood that after sending the MO data to the first satellite and before receiving the first indication information, the terminal device buffers the MO data.

In the embodiment of the present disclosure, if the terminal device is in the RRC IDLE state or the RRC INACTIVE state, the terminal device may continue to be in the RRC IDLE state or the RRC INACTIVE state after receiving the first indication information. If the terminal device is in the RRC_CONNECTED state, after receiving the first indication information, the terminal device may continue to be in the RRC_CONNECTED state or may convert to be in the RRC IDLE state or the RRC INACTIVE state.

In the embodiment of the present disclosure, after the terminal device sends the MO data to the first satellite in the store-and-forward mode, the terminal device receives the first indication information sent by the first satellite, and determines, based on the first indication information, that the first satellite successfully receives the MO data sent by the terminal device. After receiving the first indication information, the terminal device buffers the MO data, so that the terminal device continues to buffer the sent MO data in a case where it is determined that the sent MO data is successfully sent to the first satellite using the store-and-forward mode, until it is determined that the MO data is successfully delivered to the core network or the MO data is invalid, the buffered MO data is cleared. The terminal device does not need to monitor the downlink channel in a procedure of the first satellite successfully delivering the MO data to the core network, thereby balancing the requirement of the power saving of the terminal while ensuring the reliability of the data transmission.

In some embodiments, the first indication information is carried in a first message, and the first message includes one of the followings:
a first Radio Resource Control (RRC) message;
a physical layer Hybrid Automatic Repeat-reQuest (HARQ) message, i.e., a PHY HARQ message;
an radio link control layer Automatic Repeat-reQuest (ARQ) message, i.e., RLC ARQ; and
a Packet Data Convergence Protocol (PDCP) layer acknowledgement message.

If the terminal device in the RRC IDLE state or the RRC INACTIVE state sends the MO data to the first satellite, the first satellite returns the first RRC message to the terminal device. In this case, the first indication information is carried in the first RRC message.

In some embodiments, the first indication information is explicitly carried in the first RRC message.

If the terminal device in the RRC_CONNECTED state sends the MO data to the first satellite, the first satellite returns the PHY HARQ message, the RLC ARQ message, or the PDCP layer acknowledgement message to the terminal device. In this case, the first indication information is carried in the PHY HARQ message, the RLC ARQ message, or the PDCP layer acknowledgement message.

In some embodiments, the first indication information is implicitly carried in the PHY HARQ message, the RLC ARQ message, or the PDCP layer acknowledgement message. In an example, if the terminal device receives the PHY HARQ message, the RLC ARQ message, or the PDCP layer acknowledgement message, it is considered that the terminal device receives the first indication information.

In some embodiments, the first RRC message includes one of the followings: an RRC early data completion (denoted as RRCEarlyDataComplete) message; an RRC connection release (denoted as RRCConnectionRelease) message; an RRC connection reject (denoted as RRCConnectionReject) message; an RRC connection set up (denoted as RRCConnectionSetup) message; an RRC connection resume (denoted as RRCConnectionResume) message; an RRC release (denoted as RRCRelease) message; an RRC reject (denoted as RRCReject) message; an RRC set up (denoted as RRCSetup) message; an RRC resume (denoted as RRC Resume) message; and a preset RRC message.

The terminal device accessing the eMTC system or the NB-IoT system is taken as an example, the first RRC message includes one of the followings: the RRC early data completion (denoted as RRCEarlyDataComplete) message; the RRC connection release (denoted as RRCConnectionRelease) message; the RRC connection reject (denoted as RRCConnectionReject) message; the RRC connection set up (denoted as RRCConnectionSetup) message; an RRC connection resume (denoted as RRCConnectionResume) message; and the preset RRC message.

The terminal device accessing the NR system is taken as an example, the first RRC message includes one of the followings: the RRC release (denoted as RRCRelease) message; the RRC reject (denoted as RRCReject) message; the RRC set up (denoted as RRCSetup) message; the RRC resume (denoted as RRC Resume) message; and the preset RRC message.

The preset RRC message may be understood as a newly defined RRC message or a newly introduced RRC message dedicated to carrying the first indication information.

In some embodiments, the terminal device determines, based on second indication information, that the MO data is successfully delivered to the core network and/or the buffered MO data is invalid.

In some embodiments, the second indication information is used for the terminal device to determine whether the MO data is successfully delivered to the core network and/or the buffered MO data is invalid.

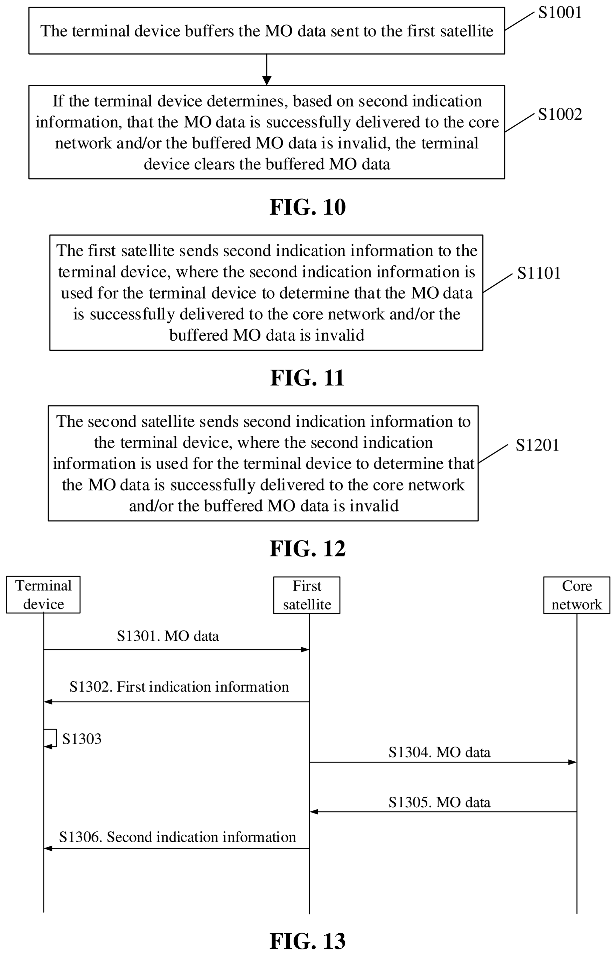

As illustrated in FIG. 10, the embodiment of the present disclosure provides a method for wireless communication, applied to the terminal device and includes following operation S1001 to operation S1002.

In operation S1001, the terminal device buffers the MO data sent to the first satellite.

In operation S1002, if the terminal device determines, based on second indication information, that the MO data is successfully delivered to the core network and/or the buffered MO data is invalid, the terminal device clears the buffered MO data.

After the terminal device sends the MO data to the first satellite based on the available first service link with the first satellite, if the terminal device receives the first indication information sent by the first satellite, it is considered that the first satellite successfully receives the MO data. Herein, the first satellite is operating in the store-and-forward mode, and the first feeder link with the core network is not available.

In some embodiments, the first indication information is carried on the first service link, and the second indication information is carried on a second service link.

The first indication information being carried on the first service link may be understood as that the first indication information is information sent on the first service link.

The second indication information being carried on the second service link may be understood as that the second indication information is information sent on the second service link.

In some embodiments, the first service link is a link between the terminal device and the first satellite.

The second service link is a re-communicated link between the terminal device and the first satellite, or a link between the terminal device and a second satellite.

The second service link being the re-communicated link between the terminal device and the first satellite is taken as an example, after the terminal device sends the MO data to the first satellite, the first service link between the terminal device and the first satellite is unavailable as the terminal device and/or the first satellite moves. As the terminal device and/or the first satellite moves again, the terminal device moves within the coverage of the first satellite again, the link between the terminal device and the first satellite is re-communicated, the service link between the first satellite and the terminal device is re-available, and the first satellite may send the second indication information to the terminal device through the re-available service link.

The second service link being the communicated link between the terminal device and the second satellite is taken as an example, after the terminal device sends the MO data to the first satellite, the first service link between the terminal device and the first satellite is unavailable as the terminal device and/or the first satellite moves. The terminal device moves to the coverage of the second satellite, and the link between the terminal device and the second satellite is communicated, i.e., the service link between the second satellite and the terminal device is available, and then, the second satellite is able to send the second indication information to the terminal device through the available service link.

It is to be noted that the terminal device may determine that the MO data is successfully delivered to the core network and/or the buffered MO data is invalid based on whether the second indication information is received. Alternatively, in the case where the second indication information is received, the terminal device may determine that the MO data is successfully delivered to the core network and/or the buffered MO data is invalid based on the content indicated in the received second indication information.

As illustrated in FIG. 11, the embodiment of the present disclosure provides a method for wireless communication, applied to a first satellite and includes following operation S1101.

In operation S1101, the first satellite sends second indication information to the terminal device, where the second indication information is used for the terminal device to determine that the MO data is successfully delivered to the core network and/or the buffered MO data is invalid.

Herein, the MO data buffered in the terminal device is cleared in a case where the MO data is successfully delivered to the core network and/or the buffered MO data is invalid.

In this case, the second service link is the re-communicated link between the terminal device and the first satellite, and the serving satellite of the terminal device is the first satellite.

As illustrated in FIG. 12, the embodiment of the present disclosure provides a method for wireless communication, applied to a second satellite and includes following operation S1201.

In operation S1201, the second satellite sends second indication information to the terminal device, where the second indication information is used for the terminal device to determine that the MO data is successfully delivered to the core network and/or the buffered MO data is invalid.

Herein, the MO data buffered in the terminal device is cleared in a case where it is determined that the MO data is successfully delivered to a core network and/or the buffered MO data is invalid.

In this case, the second service link is the link between the terminal device and the second satellite, and the serving satellite of the terminal device is the second satellite.

Hereinafter, the second indication information in FIG. 10, FIG. 11, or FIG. 12 will be described.

In some embodiments, the second indication information is included in a second message, and the second message includes one of the followings:
a first paging message; and a second RRC message.

In FIG. 11, the second indication information may be included in the second message sent by the first satellite to the terminal device.

If the second indication information is included in the first paging message sent by the first satellite to the terminal device, and in the case where the service link between the first satellite and the terminal device is re-communicated, the first satellite sends the first paging message to the terminal device, and in this case, the first satellite may enable the first paging message to carry the second indication information sent to the terminal device.

In the case where the first paging message carries the second indication information, the signaling in the interaction between the first satellite and the terminal device is reduced, and the system overhead is reduced.

If the second message includes the second RRC message, the terminal device further implements one of the following operations.

The terminal device sends the MO data

The terminal device initiates an RRC connection set up procedure or an RRC connection resume procedure.

If the service link between the terminal device and the first satellite is re-communicated, the terminal device re-sends the MO data to the first satellite or initiates the RRC connection set up procedure or the RRC connection resume procedure to the first satellite.

In this case, the first satellite further implements one of the following operations.

The first satellite receives the MO data sent by the terminal device.

The first satellite receives a third message, where the third message is a message in the RRC connection set up procedure or the RRC connection resume procedure initiated by the terminal device.

In some embodiments, the first satellite further implements following operation.

The first satellite sends a third paging message to the terminal device.

In the case where the service link between the terminal device and the first satellite is re-communicated, the first satellite sends the third paging message to the terminal device, and the terminal device re-sends the buffered MO data to the first satellite, or sends the third message to the first satellite to initiate the RRC connection set up procedure or RRC connection resume procedure. In response to the MO data re-sent by the terminal device or the RRC connection set up procedure or the RRC connection resume procedure initiated by the terminal device, the first satellite sends a second RRC message to the terminal device. In this case, the first satellite may enable the second RRC message to carry the second indication information sent to the terminal device.

In a case where the first satellite sends a paging message to the terminal device and receives the MO data or the third message sent by the terminal device, and when the second RRC message carries the second indication information, it is ensured that the second satellite pages to the terminal device and sends the second indication information to the terminal device, thereby improving reliability of the transmission of the second indication information.

In some embodiments, the second RRC message includes one of the followings: an RRC early data completion message; an RRC connection release message; an RRC connection reject message; an RRC connection set up message; an RRC connection resume message; an RRC release message; an RRC reject message; an RRC connection message; and an RRC resume message.

In some embodiments, for the second indication information, the manners where the second indication information is used for the terminal device to determine that the MO data is successfully delivered to the core network and/or the buffered MO data is invalid include one of a first indication manner and a second indication manner.

In the first indication manner, the second indication information is used to indicate whether the MO data is successfully delivered to the core network.

In the second indication manner, the second indication information is used to indicate that the MO data is successfully delivered to the core network.

The second indication information using the first indication manner is taken as an example, which is applicable to two scenarios: the terminal device receives the second indication information, and the terminal device does not receive the second indication information.

In the first scenario, the first satellite sends the second indication information to the terminal device.

In the first scenario, based on different contents indicated in the second indication information, the second indication information is used to determine whether the MO data is successfully delivered to the core network.

In some embodiments, the second indication information indicating an acknowledgement (ACK) is used to determine that the MO data is successfully delivered to the core network; and/or the second indication information indicating a negative acknowledgement (NACK) is used to determine that the MO data is failed to be delivered to the core network.

It is to be understood that when the second indication information received by the terminal device indicates the acknowledgement, the terminal device determines that the MO data is successfully delivered to the core network; and/or when the second indication information received by the terminal device indicates a negative acknowledgement, the terminal device determines that the MO data is failed to be delivered to the core network.

It is to be understood that if the first satellite sends the second indication information to the terminal device, then:
the second indication information indicating the acknowledgement is used to determine that the MO data is successfully delivered to the core network; or
the second indication information indicating the negative acknowledgement is used to determine that the MO data is failed to be delivered to the core network.

Herein, the first satellite sends the second indication information to the terminal device, and the second indication information is used to indicate whether the MO data is successfully delivered to the core network. If the terminal device receives the second indication information sent by the first satellite, and the second indication information indicates the ACK, the terminal device determines that the MO data sent to the first satellite is successfully delivered to the core network. If the terminal device receives the second indication information sent by the first satellite, and the second indication information indicates the NACK, the terminal device determines that the MO data sent to the first satellite is failed to be delivered to the core network.

In the second scenario, the first satellite does not send the second indication information to the terminal device.

The terminal device determines whether the second indication information is received within the first duration. If the second indication information is received within the first duration, the first scenario is entered; and if the second indication information is not received within the first duration, it is considered that the first satellite does not send the second indication information.

In the second scenario, based on the fact that the second indication information is not received, the terminal device determines that:
the MO data is successfully delivered to the core network; or
the MO data is failed to be delivered to the core network, and/or the buffered MO data is invalid.

In some embodiments, if the terminal device does not receive the second indication information within the first duration, then:
the terminal device determines that the MO data is successfully delivered to the core network; or
the terminal device determines that the MO data is failed to be delivered to the core network, and/or the terminal device determines that the buffered MO data is invalid.

In some embodiments, the first satellite does not send the second indication information to the terminal device, which is used to determine that:
the MO data is successfully delivered to the core network; or
the MO data is failed to be delivered to the core network, and/or the buffered MO data is invalid.

In the embodiment of the present disclosure, the terminal device detects whether the second indication information sent by the first satellite is received within the first duration. If the second indication information sent by the first satellite is received within the first duration, based on the second indication information indicating the ACK or the NACK, the terminal device determines whether the MO data is successfully delivered to the core network. If the terminal device does not receive the second indication information sent by the first satellite within the first duration, it is considered that the MO data is successfully delivered to the core network, or it is considered that the MO data is failed to be delivered to the core network, and/or the buffered MO data is invalid.

The second indication information using the second indication manner is taken as an example, which is applicable to two scenarios: the terminal device receives the second indication information, and the terminal device does not receive the second indication information.

In the first scenario, the first satellite sends the second indication information to the terminal device.

In the first scenario, the terminal device receives second indication information sent by the first satellite, and the second indication information is used to indicate that the MO data is successfully delivered to the core network.

It is to be understood that when the second indication information received by the terminal device indicates the acknowledgement, the terminal device determines that the MO data is successfully delivered to the core network.

It is to be understood that if the first satellite sends the second indication information to the terminal device, the second indication information indicating the acknowledgement is used to determine that the MO data is successfully delivered to the core network.

Herein, the first satellite sends the second indication information to the terminal device, and the second indication information is used to indicate that the MO data is successfully delivered to the core network. The terminal device receives the second indication information sent by the first satellite, and the second indication information indicates the ACK, the terminal device determines, based on the received second indication information, that the MO data sent to the first satellite is successfully delivered to the core network.

In the second scenario, the first satellite does not send the second indication information to the terminal device.

The terminal device determines whether the second indication information is received within the first duration. If the second indication information is received within the first duration, the first scenario is entered; and if the second indication information is not received within the first duration, it is considered that the first satellite does not send the second indication information.

In the second scenario, based on the fact that the second indication information is not received, the terminal device determines that:
the MO data is failed to be delivered to the core network, and/or the buffered MO data is invalid.

In some embodiments, if the terminal device does not receive the second indication information within the first duration, then:
the terminal device determines that the MO data is failed to be delivered to the core network, and/or the terminal device determines that the buffered MO data is invalid.

In some embodiments, the first satellite does not send the second indication information to the terminal device, which is used to that: the MO data is failed to be delivered to the core network and/or the buffered MO data is invalid.

In the embodiment of the present disclosure, the terminal device detects whether the second indication information sent by the first satellite is received within the first duration. If the second indication information sent by the first satellite is received within the first duration, based on the second indication information indicating the ACK, the terminal device determines that the MO data is successfully delivered to the core network. If the terminal device does not receive the second indication information sent by the first satellite within the first duration, it is considered that the MO data is failed to be delivered to the core network, and/or the buffered MO data is invalid.

In the embodiment of the present disclosure, in the aforementioned first scenario or the second scenario, in the case where the terminal device determines, based on the second indication information, that the MO data sent to the first satellite is failed to be delivered to the core network, the terminal device may send the buffered MO data to the first satellite, thereby re-sending the MO data that is failed to be delivered to the core network to the first satellite.

In the aforementioned first scenario or the second scenario, in some embodiments, a starting time of the first duration is a reception time of the first indication information, or a moment when the terminal device sends the MO data for a first time or for a last time.

In the embodiment of the present disclosure, the terminal device may turn on a timer after receiving the first indication information or sending the MO data for the first time or sending the MO data for the last time, and the duration of the timer is the first duration. If the terminal device receives the second indication information before the turned-on timer expires, it is considered that the second indication information is received. If the terminal device does not receive the second indication information before the timer expires, it is considered that the second indication information is not received within the first duration.

In some embodiments, the first satellite receives third indication information sent by the core network, where the third indication information is used to indicate whether the core network successfully receives the MO data.

The first satellite determines the second indication information based on the third indication information.

It is to be understood that the second indication information is determined based on third indication information sent by the core network, and the third indication information is used to indicate whether the core network successfully receives the MO data. In an example, if the third indication information indicates the ACK, the third indication information indicates that the core network successfully receives the MO data. In an example, if the third indication information indicates the NACK, the third indication information indicates that the core network fails to receive the MO data.

In the embodiment of the present disclosure, the second indication information is further used to indicate the MO data.

It is to be understood that the second indication information carries a first index of the MO data or a second index of the first satellite, thereby indicating that the MO data is successfully delivered to the core network and/or the MO data is invalid, i.e. indicating which MO data is successfully delivered to the core network and/or which MO data is invalid.

In the embodiment of the present disclosure, the terminal device may send different MO data to different satellites, and in the case where the second indication information indicates MO data, the terminal device is able to determine that the MO data that is sent to the first satellite is successfully delivered to the core network and/or is invalid, thereby clearing the MO data in the buffer.

In some embodiments, the second indication information is included in a fourth paging message sent by the core network to the first satellite.

Based on FIG. 10 and FIG. 11, the method for wireless communication provided by the embodiment of the present disclosure, as illustrated in FIG. 13, includes following operation S1301 to operation S1306.

In operation S1301, the terminal device sends the MO data to the first satellite through an available service link with the first satellite.

In operation S1302, the first satellite stores the received MO data and sends first indication information to the terminal device.

In operation S1303, the terminal device continues to buffer the MO data based on the first indication information.

In operation S1304, when the feeder link between the first satellite and the core network is available, the stored MO data is sent to the core network.

In operation S1305, the core network sends third indication information to the first satellite.

In operation S1306, the first satellite determines the second indication information based on the third indication information, and sends the second indication information to the terminal device or does not send the second indication information to the terminal device.

Herein, in the operation S1306, the second indication information may be carried in the first paging message sent by the first satellite to the terminal device. Before the operation S1306, the first satellite may send the third paging message to the terminal device, in response to the third paging message, the terminal device may re-send the MO data to the first satellite or initiate the RRC connection set up procedure or the RRC connection resume procedure. The first satellite may return the second RRC message to the terminal device based on the MO data re-sent by the terminal device or the RRC connection establishment procedure or the RRC connection resume procedure initiated by the terminal device. In this case, the second indication information in the operation S1306 is carried in the second RRC message sent by the first satellite to the terminal device.

In FIG. 12, the second indication information may be included in the second message sent by the second satellite to the terminal device.

If the second indication information is included in the first paging message sent by the second satellite to the terminal device, and in the case where the service link between the second satellite and the terminal device is communicated, the second satellite sends the first paging message to the terminal device to indicate that the service link between the terminal device and the second satellite is communicated. In this case, the second satellite may enable the first paging message to carry the second indication information sent to the terminal device.

In the case where the first paging message carries the second indication information, the signaling in the interaction between the second satellite and the terminal device is reduced, and the system overhead is reduced.

If the second message includes the second RRC message, the terminal device further implements one of the following operations.

The terminal device sends the MO data.

The terminal device initiates the RRC connection set up procedure or the RRC connection resume procedure.

If the service link between the terminal device and the second satellite is communicated, the terminal device re-sends the MO data to the second satellite or initiates the RRC connection set up procedure or the RRC connection resume procedure to the second satellite.

In this case, the second satellite further implements one of the following operations.

The second satellite receives the MO data sent by the terminal device.

The second satellite receives a third message, where the third message is a message in the RRC connection set up procedure or the RRC connection resume procedure initiated by the terminal device.

In some embodiments, the second satellite further implements following operation.

The second satellite sends a third paging message to the terminal device.

In the case where the service link between the second satellite and the terminal device is communicated, the second satellite sends the third paging message to the terminal device, and the terminal device sends the buffered MO data to the second satellite, or sends the third message to the second satellite to initiate the RRC connection set up procedure or the RRC connection resume procedure. In response to the MO data sent by the terminal device or the RRC connection set up procedure or the RRC connection resume procedure initiated by the terminal device, the second satellite sends the second RRC message to the terminal device. In this case, the second satellite may enable the second RRC message to carry the second indication information sent to the terminal device.

In a case where the first satellite sends a paging message to the terminal device and receives the MO data or the third message sent by the terminal device, and when the second RRC message carries the second indication information, it is ensured that the second satellite pages to the terminal device and sends the second indication information to the terminal device, thereby improving reliability of the transmission of the second indication information.

In some embodiments, the second RRC message includes one of the followings: an RRC early data completion message; an RRC connection release message; an RRC connection reject message; an RRC connection set up message; an RRC connection resume message; an RRC release message; an RRC reject message; an RRC connection message; and an RRC resume message.

In some embodiments, for the second indication information, the manners where the second indication information is used for the terminal device to determine that the MO data is successfully delivered to the core network and/or the buffered MO data is invalid include one of a first indication manner and a second indication manner.

In the first indication manner, the second indication information is used to indicate whether the MO data is successfully delivered to the core network.

In the second indication manner, the second indication information is used to indicate that the MO data is successfully delivered to the core network.

The second indication information using the first indication manner is taken as an example, which is applicable to two scenarios: the terminal device receives the second indication information, and the terminal device does not receive the second indication information.

In the third scenario, the second satellite sends the second indication information to the terminal device.

In the third scenario, based on different contents indicated in the second indication information, the second indication information is used to determine whether the MO data is successfully delivered to the core network.

In some embodiments, the second indication information indicating an acknowledgement (ACK) is used to determine that the MO data is successfully delivered to the core network; and/or the second indication information indicating a negative acknowledgement (NACK) is used to determine that the MO data is failed to be delivered to the core network.

It is to be understood that when the second indication information received by the terminal device indicates the acknowledgement, the terminal device determines that the MO data is successfully delivered to the core network; and/or when the second indication information received by the terminal device indicates a negative acknowledgement, the terminal device determines that the MO data is failed to be delivered to the core network.

It is to be understood that if the second satellite sends the second indication information to the terminal device, then:

the second indication information indicating the acknowledgement is used to determine that the MO data is successfully delivered to the core network; or

the second indication information indicating the negative acknowledgement is used to determine that the MO data is failed to be delivered to the core network.

Herein, the second satellite sends the second indication information to the terminal device, and the second indication information is used to indicate whether the MO data is successfully delivered to the core network. If the terminal device receives the second indication information sent by the second satellite, and the second indication information indicates the ACK, the terminal device determines that the MO data sent to the first satellite is successfully delivered to the core network. If the terminal device receives the second indication information sent by the second satellite, and the second indication information indicates the NACK, the terminal device determines that the MO data sent to the first satellite is failed to be delivered to the core network.

In the fourth scenario, the second satellite does not send the second indication information to the terminal device.

The terminal device determines whether the second indication information is received within the first duration. If the second indication information is received within the first duration, the third scenario is entered; and if the second indication information is not received within the first duration, it is considered that the first satellite does not send the second indication information.

In the fourth scenario, based on the fact that the second indication information is not received, the terminal device determines that:
the MO data is successfully delivered to the core network; or
the MO data is failed to be delivered to the core network, and/or the buffered MO data is invalid.

In some embodiments, if the terminal device does not receive the second indication information within the first duration, then:
the terminal device determines that the MO data is successfully delivered to the core network; or
the terminal device determines that the MO data is failed to be delivered to the core network, and/or the terminal device determines that the buffered MO data is invalid.

In some embodiments, the second satellite does not send the second indication information to the terminal device, which is used to determine that:
the MO data is successfully delivered to the core network; or
the MO data is failed to be delivered to the core network, and/or the buffered MO data is invalid.

In the embodiment of the present disclosure, the terminal device detects whether the second indication information sent by the second satellite is received within the first duration. If the second indication information sent by the second satellite is received within the first duration, based on the second indication information indicating the ACK or the NACK, the terminal device determines whether the MO data is successfully delivered to the core network. If the terminal device does not receive the second indication information sent by the second satellite within the first duration, it is considered that the MO data is successfully delivered to the core network, or it is considered that the MO data is failed to be delivered to the core network and/or the buffered MO data is invalid.

The second indication information using the second indication manner is taken as an example, which is applicable to two scenarios: the terminal device receives the second indication information, and the terminal device does not receive the second indication information.

In the third scenario, the second satellite sends the second indication information to the terminal device.

In the third scenario, the terminal device receives second indication information sent by the second satellite, and the second indication information is used to indicate that the MO data is successfully delivered to the core network.

In some embodiments, the second indication information indicating an acknowledgement is used to determine that the MO data is successfully delivered to the core network.

It is to be understood that when the second indication information received by the terminal device indicates the acknowledgement, the terminal device determines that the MO data is successfully delivered to the core network.

It is to be understood that if the second satellite sends the second indication information to the terminal device, then the second indication information indicates the acknowledgement, which is used to determine that the MO data is successfully delivered to the core network.

Herein, the second satellite sends the second indication information to the terminal device, and the second indication information is used to indicate that the MO data is successfully delivered to the core network. The terminal device receives the second indication information sent by the second satellite, and the second indication information indicates the ACK, the terminal device determines, based on the received second indication information, that the MO data sent to the first satellite is successfully delivered to the core network.

In the fourth scenario, the second satellite does not send the second indication information to the terminal device.

The terminal device determines whether the second indication information is received within the first duration. If the second indication information is received within the first duration, the third scenario is entered; and if the second indication information is not received within the first duration, it is considered that the first satellite does not send the second indication information.

In the fourth scenario, based on the fact that the second indication information is not received, the terminal device determines that:
the MO data is failed to be delivered to the core network, and/or the buffered MO data is invalid.

In some embodiments, if the terminal device does not receive the second indication information within the first duration, then:
the terminal device determines that the MO data is failed to be delivered to the core network, and/or the terminal device determines that the buffered MO data is invalid.

In some embodiments, if the second satellite does not send the second indication information to the terminal device, it is determined that: the MO data is failed to be delivered to the core network and/or the buffered MO data is invalid.

In the embodiment of the present disclosure, the terminal device detects whether the second indication information sent by the second satellite is received within the first duration. If the second indication information sent by the second satellite is received within the first duration, based on the second indication information indicating the ACK, the terminal device determines that the MO data is successfully delivered to the core network. If the terminal device does not receive the second indication information sent by the second satellite within the first duration, it is considered that the MO data is failed to be delivered to the core network, and/or the buffered MO data is invalid.

In the embodiment of the present disclosure, in the aforementioned third scenario or the fourth scenario, in the case where the terminal device determines, based on the second indication information, that the MO data sent to the first satellite is failed to be delivered to the core network, the terminal device may send the buffered MO data to the second satellite, thereby sending the MO data that is failed to be delivered to the core network to the second satellite.

In the aforementioned third scenario or the fourth scenario, in some embodiments, a starting time of the first duration is a reception time of the first indication information, or a moment when the terminal device sends the MO data for a first time or for a last time.

In the embodiment of the present disclosure, the terminal device may turn on a timer after receiving the first indication information or sending the MO data for the first time or sending the MO data for the last time, and the duration of the timer is the first duration. If the terminal device receives the second indication information before the turned-on timer expires, it is considered that the second indication information is received. If the terminal device does not receive the second indication information before the timer expires, it is considered that the second indication information is not received within the first duration.

In some embodiments, the second satellite receives third indication information sent by the core network, where the third indication information is used to indicate whether the core network successfully receives the MO data.

The second satellite determines the second indication information based on the third indication information.

It is to be understood that the second indication information is determined based on third indication information sent by the core network, and the third indication information is used to indicate whether the core network successfully receives the MO data. In an example, if the third indication information indicates the ACK, the third indication information indicates that the core network successfully receives the MO data. In an example, if the third indication information indicates the NACK, the third indication information indicates that the core network fails to receive the MO data.

In the embodiment of the present disclosure, the second indication information is further used to indicate the MO data.

It is to be understood that the second indication information carries a first index of the MO data or a second index of the first satellite, thereby indicating that the MO data is successfully delivered to the core network and/or the MO data is invalid, i.e. indicating which MO data is successfully delivered to the core network and/or which MO data is invalid.

In the embodiment of the present disclosure, the terminal device may send different MO data to different satellites, and in the case where the second indication information indicates the MO data, the terminal device is able to determine that the MO data that is sent to the first satellite is successfully delivered to the core network and/or is invalid, thereby clearing the MO data in the buffer.

In some embodiments, the second indication information is included in a fourth paging message sent by the core network to the second satellite.

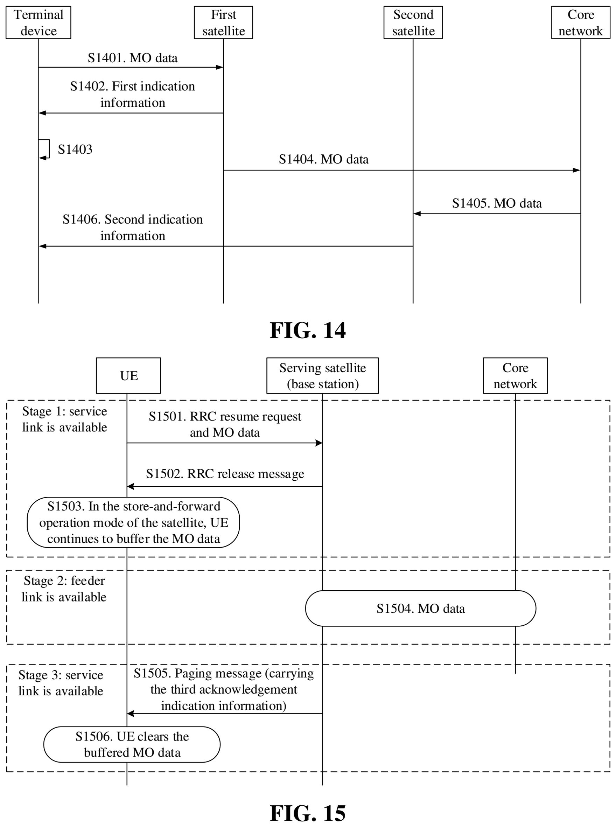

Based on FIG. 10 and FIG. 12, the method for wireless communication provided by the embodiment of the present disclosure, as illustrated in FIG. 14, includes following operation S1401 to operation S1406.

In operation S1401, the terminal device sends the MO data to the first satellite through an available service link with the first satellite.

In operation S1402, the first satellite stores the received MO data and sends first indication information to the terminal device.

In operation S1403, the terminal device continues to buffer the MO data based on the first indication information.

In operation S1404, when the feeder link between the first satellite and the core network is available, the stored MO data is delivered to the core network.

In operation S1405, the core network sends third indication information to the second satellite.

In operation S1406, the second satellite determines the second indication information based on the third indication information, and sends the second indication information to the terminal device or does not send the second indication information to the terminal device.

In the operation S1406, the second indication information may be carried in the first paging message sent by the first satellite to the terminal device. Before the operation S1306, the first satellite may send the third paging message to the terminal device, in response to the third paging message, the terminal device may re-send the MO data to the first satellite or initiate the RRC connection set up procedure or the RRC connection resume procedure. The first satellite may return the second RRC message to the terminal device based on the MO data re-sent by the terminal device or the RRC connection establishment procedure or the RRC connection resume procedure initiated by the terminal device. In this case, the second indication information in the operation S1406 is carried in the second RRC message sent by the first satellite to the terminal device.

It is to be understood that the methods for wireless communication illustrated in FIG. 8, FIG. 9, FIG. 10, FIG. 11, and FIG. 12 may be implemented independently, or the solutions of which may be combined without conflicting.

Hereinafter, the method for wireless communication provided by the embodiment of the present disclosure will be described.

The embodiment of the present disclosure provides a method for transmitting the MO data in the store-and-forward operation mode of the satellite in the NTN. By optimizing and redesigning the flow of the MO data transmission, it is possible to balance the requirement for the power saving of the terminal while ensuring the reliability of the data transmission.

The method for wireless communication provided by the embodiment of the present disclosure includes, but is not limited to, the following a first embodiment to a fourth embodiment.

### First embodiment

In the store-and-forward operation mode of the satellite, for the MO-EDT or the MO-SDT, if the UE receives an RRC response message from the satellite after sending the MO data, the UE considers that the satellite successfully receives the MO data. In this case, the UE continues to buffer the MO data until the UE receives a paging message for the next time from the satellite and the paging message carries an ACK message of the successful delivery of the MO data, the UE clears the MO data.

In the first embodiment, the method for wireless communication includes following three stages: a stage 1, a stage 2 and a stage 3.

The stage 1 where the service link is available.

The MO data arrives, the UE initiates the MO-EDT (for the eMTC or the NB-IoT UE) or the MO-SDT (for the NR UE). The UE sends the MO data to a first satellite (or a base station).

After the UE sends the MO data, if the UE receives a first RRC message from the first satellite (or the base station), the UE considers that the first satellite (or the base station) successfully receives the MO data.

Furthermore, the first RRC message may be: an existing RRC message (for example, for the eMTC or the NB-IoT UE, the first RRC message may be the RRCEarlyDataComplete message, the RRCConnectionRelease message, the RRCConnectionReject message, or the like; for the NR UE, the first RRC message may be the RRCRelease message or the RRCReject message, or the like), or a newly introduced RRC message. Optionally, the first RRC message may explicitly carry first acknowledgement indication information (i.e., first indication information), and the first acknowledgement indication information is used to indicate that the satellite (or the base station) successfully receives the MO data.

If the first satellite is in the store-and-forward mode, after receiving the first RRC message, the UE continues to maintain to be in the RRC IDLE or RRC INACTIVE. Furthermore, in this case, the UE does not clear the buffer, but continues to buffer the MO data.

The stage 2 where the feeder link is available.

After the first satellite sets up a feeder link connection with the ground core network, the first satellite delivers the stored MO data from the UE to the core network.

The core network sends second acknowledgement indication information (i.e., the third indication information) to the second satellite, and the second acknowledgement indication information is used to indicate whether the core network successfully receives the MO data of the UE.
- Optionally, the second acknowledgement indication information may be carried in a PAGING message sent by the CN to the second satellite.
- Herein, the second satellite is a satellite other than the first satellite, and the second satellite may be replaced with the first satellite.

The stage 3 where the service link is available.

When the first satellite flies over the UE, the first satellite sends a paging message to the UE, and the paging message carries third acknowledgement indication information (i.e., the second indication information). The third acknowledgement indication information may be carried in a paging PDCCH or a paging Physical Downlink Shared Channel (PDSCH). Optionally, which MO data of the UE the third indication information is targeting may be further indicated.

Furthermore, the third acknowledgement indication information may indicate in a first manner and a second manner.

In the first manner, the third acknowledgement indication information is used to indicate whether the MO data of the UE is successfully delivered to the CN. In this case:
- the third acknowledgement indication information indicates the ACK, which represents that the MO data of the UE is successfully delivered to the CN, then, the UE clears the MO data buffered in the buffer;
- the third acknowledgement indication information indicates the NACK, which represents that the MO data of the UE is failed to be delivered to the CN, then, the UE may re-initiate the MO-EDT or MO-SDT in order to send the MO data to the satellite (or the base station); and
- the UE does not receive the third acknowledgement indication information within a duration (for example, the UE turns on the first timer after receiving the first RRC message, and when the first timer expires), then:
   in an option 1, the UE considers that the MO data is successfully delivered to the CN, and the UE clears the MO data buffered in the buffer;
   in an option 2, the UE considers that the MO data is failed to be delivered to the CN, and the UE re-initiates the MO-EDT or the MO-SDT in order to send the MO data to the satellite (or the base station); and
   in an option 3, the UE considers that the MO data is timed out, i.e. failed or invalid, and the UE clears the MO data buffered in the buffer.
   In the second manner, the third acknowledgement indication information is used to indicate that the MO data of the UE is successfully delivered to the CN. In this case:
- the received third acknowledgement indication information indicates the ACK, which represents that the MO data of the UE is successfully delivered to the CN, then, the UE clears the MO data buffered in the buffer; and
- the UE does not receive the third acknowledgement indication information within a duration (for example, the UE turns on the first timer after receiving the first RRC message, and when the first timer expires), then:
   in an option 1, the UE considers that the MO data is failed to be delivered to the CN, and the UE re-initiates the MO-EDT or the MO-SDT in order to send the MO data to the satellite (or the base station); and
   in an option 2, the UE considers that the MO data is timed out and invalid, and the UE clears the MO data buffered in the buffer.

In an example, the third indication information being sent by the first satellite is taken as an example, as illustrated in FIG. 15, the method for wireless communication includes operation S1501 to operation S1506.

In operation S1501, the UE sends the RRC resume request and MO data to the serving satellite through the service link.

In operation S1502, the UE receives the RRC release message sent by the serving satellite through the service link.

Herein, the serving satellite may have functions of a base station.

In operation S1503, in the store-and-forward operation mode of the satellite, the UE continues to buffer the MO data.

In operation S1504, the serving satellite delivers the MO data to the core network.

Herein, the core network sends the second acknowledgement indication information to the serving satellite.

In operation S1505, the serving satellite sends a paging message carrying the third acknowledgement indication information to the UE.

In operation S1506, the UE clears the buffered MO data.

The operation S1501 to operation S1503 are performed at the stage 1 where the service link between the UE and the serving satellite is available.

The operation S1504 is performed at the stage 2 where the feeder link between the serving satellite and the terrestrial core network, i.e. the core network, is available.

The operation S1505 to operation S1506 are performed at the stage 3 where the service link between the UE and the serving satellite is available.

### Second embodiment

In the store-and-forward operation mode of the satellite, after the UE in the RRC connected state sends the MO data and receives the acknowledgement message from the satellite, the UE continues to buffer the MO data until the UE receives a paging message for the next time from the satellite and the paging message carries the ACK message of the successful delivery of the MO data, the UE clears the MO data.

In the second embodiment, the method for wireless communication includes following three stages: a stage 1, a stage 2 and a stage 3.

The stage 1 where the service link is available.

After the UE in the RRC connected state sends the MO data to the first satellite (or the base station), if the UE receives the PHY HARQ/RLC ARQ/PDCP acknowledgement message from the first satellite (or the base station), the UE considers that the first satellite (or the base station) successfully receives the MO data. In this case, the UE does not clear the buffer, but continues to buffer the MO data. (Even if the UE is released to be in the RRC IDLE or RRC INACTIVE).

The stage 2 where the feeder link is available.

After the first satellite sets up a feeder link connection with the ground core network, the first satellite delivers the stored MO data from the UE to the core network.

The core network sends second acknowledgement indication information to the second satellite, and the second acknowledgement indication information is used to indicate whether the core network successfully receives the MO data.
- Optionally, the second acknowledgement indication information may be carried in a PAGING message sent by the core network to the second satellite.
- Herein, the second satellite is a satellite other than the first satellite, and the second satellite may be replaced with the first satellite.

The stage 3 where the service link is available.

When the second satellite flies over the UE, the second satellite sends a paging message to the UE, and the paging message carries third acknowledgement indication information. The third acknowledgement indication information may be carried in a paging PDCCH or a paging PDSCH. Optionally, which MO data of the UE the third indication information is targeting may be further indicated.

Furthermore, the third acknowledgement indication information may be used to indicate whether the MO data of the UE is successfully delivered to the CN, or may be used to indicate that the MO data of the UE is successfully delivered to the CN.

### Third embodiment

In the store-and-forward operation mode of the satellite, for the MO-EDT or the MO-SDT, if the UE receives an RRC message from the satellite after sending the MO data, the UE considers that the satellite successfully receives the MO data. In this case, the UE continues to buffer the MO data until the UE receives an RRC message for the next time from the satellite when the service link is available and the paging message carries the ACK message of the successful delivery of the MO data, the UE clears the MO data.

In the third embodiment, the method for wireless communication includes following three stages: a stage 1, a stage 2 and a stage 3.

The stage 1 where the service link is available.

The MO data arrives, the UE initiates the MO-EDT (for the eMTC or the NB-IoT UE) or the MO-SDT (for the NR UE). After the UE sends the MO data to the first satellite (or the base station), if the UE receives a first RRC message from the first satellite (or the base station), the UE considers that the first satellite (or the base station) successfully receives the MO data.

Furthermore, the first RRC message may be: an existing RRC message (for example, for the eMTC or the NB-IoT UE, the first RRC message may be the RRCEarlyDataComplete message, the RRCConnectionRelease message, the RRCConnectionReject message, or the like; for the NR UE, the first RRC message may be the RRCRelease message or the RRCReject message, or the like), or a newly introduced RRC message.
- Optionally, the first RRC message may explicitly carry first acknowledgement indication information, and the first acknowledgement indication information is used to indicate that the satellite (or the base station) successfully receives the MO data.

After receiving the first RRC message, the UE continues to maintain to be in the RRC IDLE or RRC INACTIVE. Furthermore, in this case, the UE does not clear the buffer, but continues to buffer the MO data.

The stage 2 where the feeder link is available.

After the first satellite sets up a feeder link connection with the ground core network, the first satellite delivers the stored MO data from the UE to the core network.

The core network sends second acknowledgement indication information to the second satellite, and the second acknowledgement indication information is used to indicate whether the core network successfully receives the MO data.
- Optionally, the second acknowledgement indication information may be carried in a PAGING message sent by the core network to the second satellite.
- Herein, the second satellite is a satellite other than the first satellite, and the second satellite may be replaced with the first satellite.

The stage 3 where the service link is available.

When the second satellite flies over the UE, the second satellite sends a paging message to the UE, the UE performs the MO-EDT or the MO-SDT or initiates the RRC connection set up procedure or the RRC connection resume procedure after receiving the paging message, and the second satellite enables the second RRC message to carry the third acknowledgement indication information. (For example, for the eMTC or the NB-IoT UE, the second RRC message may be the RRCEarlyDataComplete message, the RRCConnectionRelease message, the RRCConnectionReject message, the RRCConnectionSetup message, the RRCConnectionResume message, or the like; for the NR UE, the first RRC message may be the RRCRelease message, the RRCReject message, the RRCConnection message, or the RRCConnection messageor the like), or a newly introduced RRC message). Optionally, which MO data of the UE the third indication information is targeting may be further indicated.

Furthermore, the third acknowledgement indication information may be used to indicate whether the MO data of the UE is successfully delivered to the CN, or may be used to indicate that the MO data of the UE is successfully delivered to the CN.

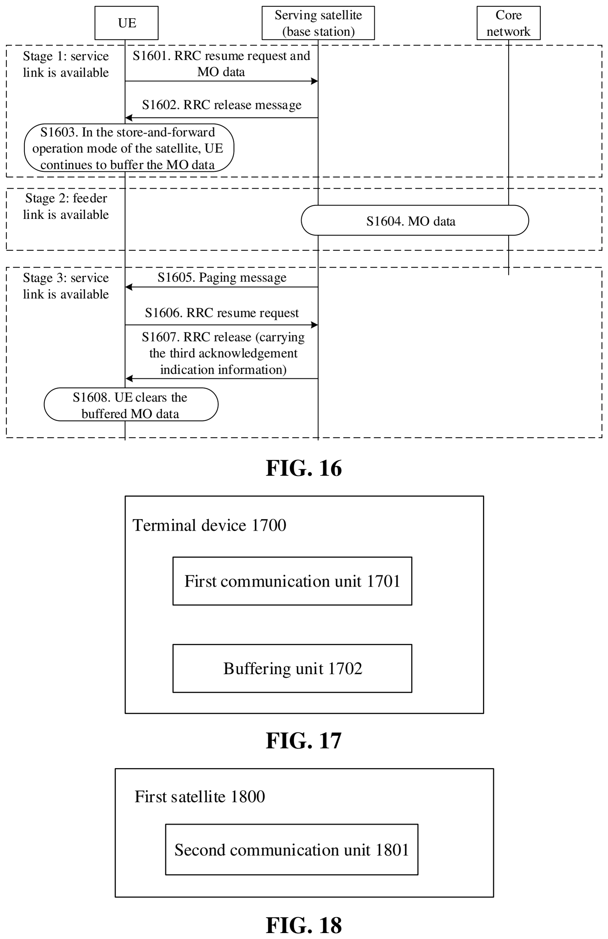

In an example, the third indication information being sent by the first satellite is taken as an example, as illustrated in FIG. 16, the method for wireless communication includes operation S1601 to operation S1606.

In operation S1601, the UE sends the RRC resume request and MO data to the serving satellite through the service link.

In operation S1602, the UE receives the RRC release message sent by the serving satellite through the service link.

In operation S1603, in the store-and-forward operation mode of the satellite, the UE continues to buffer the MO data.

In operation S1604, the serving satellite delivers the MO data to the core network.

Herein, the core network sends the second acknowledgement indication information to the serving satellite.

In operation S1605, the serving satellite sends a paging message to the UE.

In operation S1606, the UE sends the RRC resume request to the serving satellite.

In operation S1607, the serving satellite sends an RRC release message carrying the third acknowledgement indication information to the UE.

In operation S1608, the UE clears the buffered MO data.

The operation S1601 to operation S1603 are performed at the stage 1 where the service link between the UE and the serving satellite is available.

The operation S1604 is performed at the stage 2 where the feeder link between the serving satellite and the terrestrial core network, i.e. the core network, is available.

The operation S1605 to operation S1606 are performed at the stage 3 where the service link between the UE and the serving satellite is available.

### Fourth embodiment

In the store-and-forward operation mode of the satellite, after the UE in the RRC connected state sends the MO data and receives the acknowledgement message from the satellite, the UE continues to buffer the MO data until the UE receives an RRC message for the next time from the satellite when the service link is available and the paging message carries the ACK message of the successful delivery of the MO data, the UE clears the MO data.

In the fourth embodiment, the method for wireless communication includes following three stages: a stage 1, a stage 2 and a stage 3.

The stage 1 where the service link is available.

After the UE in the RRC connected state sends the MO data to the first satellite (or the base station), if the UE receives the PHY HARQ/RLC ARQ/PDCP acknowledgement message from the first satellite (or the base station), the UE considers that the first satellite (or the base station) successfully receives the MO data. In this case, the UE does not clear the buffer, but continues to buffer the MO data. (Even if the UE is released to be in the RRC IDLE or RRC INACTIVE).

The stage 2 where the feeder link is available.

After the first satellite sets up a feeder link connection with the ground core network, the first satellite delivers the stored MO data from the UE to the core network.

The core network sends second acknowledgement indication information to the second satellite, and the second acknowledgement indication information is used to indicate whether the core network successfully receives the MO data.
- Optionally, the second acknowledgement indication information may be carried in a PAGING message sent by the core network to the second satellite.
- Herein, the second satellite is a satellite other than the first satellite, and the second satellite may be replaced with the first satellite.

The stage 3 where the service link is available.

When the second satellite flies over the UE, the second satellite sends a paging message to the UE, the UE performs the MO-EDT or the MO-SDT or initiates the RRC connection set up procedure or the RRC connection resume procedure after receiving the paging message, and the second satellite enables the second RRC message to carry the third acknowledgement indication information. (For example, for the eMTC or the NB-IoT UE, the second RRC message may be the RRCEarlyDataComplete message, the RRCConnectionRelease message, the RRCConnectionReject message, the RRCConnectionSetup message, the RRCConnectionResume message, or the like; for the NR UE, the first RRC message may be the RRCRelease message, the RRCReject message, the RRCConnection message, or the RRCConnection messageor the like). Optionally, which MO data of the UE the third indication information is targeting may be further indicated.

Furthermore, the third acknowledgement indication information may be used to indicate whether the MO data of the UE is successfully delivered to the CN, or may be used to indicate that the MO data of the UE is successfully delivered to the CN.

The description of the third acknowledgement indication information in the aforementioned second embodiment to fourth embodiment may be referred to the description of the third acknowledgement indication information in the first embodiment, which is not repeated herein.

The embodiment of the present disclosure provides a method for transmitting the MO data in a store-and-forward operation mode of the satellite in the NTN. By optimizing and redesigning the flow of the MO data transmission, it is possible to balance the requirement for the power saving of the terminal while ensuring the reliability of the data transmission.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is to be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

FIG. 17 is a schematic diagram of a composition structure of a terminal device according to an embodiment of the present disclosure. As illustrated in FIG. 17, the electronic device 1700 includes a first communication unit 1701 and a buffering unit 1702.

The first communication unit 1701 is configured to receive first indication information, where the first indication information is used to determine that a first satellite successfully receives MO data sent by the terminal device, and a store-and-forward mode of the first satellite is used for transmission of the MO data; and

The buffering unit 1702 is configured to buffer the MO data, where the buffered MO data is cleared in following cases: the terminal device determines that the MO data is successfully delivered to a core network and/or the buffered MO data is invalid.

In some embodiments, the first indication information is carried in a first message, and the first message includes one of the followings:
a first Radio Resource Control (RRC) message;
a physical layer Hybrid Automatic Repeat-reQuest (HARQ) message;
a radio link control layer Automatic Repeat-reQuest (ARQ) message; and
a Packet Data Convergence Protocol (PDCP) layer acknowledgement message.

In some embodiments, the first RRC message includes one of the followings:
an RRC early data completion message; an RRC connection release message; an RRC connection reject message; an RRC connection set up message; an RRC connection resume message; an RRC release message; an RRC reject message; an RRC set up message; and an RRC resume message, and a preset RRC message.

In some embodiments, the terminal device 1700 further includes a determination unit.

The determination unit is configured to determine, based on second indication information, that the MO data is successfully delivered to the core network and/or the buffered MO data is invalid.

In some embodiments, the first indication information is carried on the first service link, and the second indication information is carried on a second service link.

In some embodiments, the first service link is a link between the terminal device and the first satellite; and
the second service link is a re-communicated link between the terminal device and the first satellite, or a link between the terminal device and a second satellite.

In some embodiments, the second indication information is included in a second message, and the second message includes one of the followings:
a first paging message; and
a second RRC message.

In some embodiments, if the second message includes the second RRC message, and the method further includes one of the followings:
the terminal device sends the MO data
the terminal device initiates an RRC connection set up procedure or an RRC connection resume procedure.

In some embodiments, the first communication unit 1702 is further configured to:
receive a third paging message.

In some embodiments, the second RRC message includes one of the followings:
an RRC early data completion message; an RRC connection release message; an RRC connection reject message; an RRC connection set up message; an RRC connection resume message; an RRC release message; an RRC reject message; an RRC connection message; and an RRC resume message.

In some embodiments, the second indication information is used to indicate whether the MO data is successfully delivered to the core network.

In some embodiments, the determination unit is further configured to:
when the second indication information received by the terminal device indicates an acknowledgement, determine that the MO data is successfully delivered to the core network; or
when the second indication information received by the terminal device indicates a negative acknowledgement, determine that the MO data is failed to be delivered to the core network.

In some embodiments, the determination unit is further configured to:
when the terminal device receives no second indication information within a first duration,
determine that the MO data is successfully delivered to the core network; or
determine that the MO data is failed to be delivered to the core network, and/or determine that the buffered MO data is invalid.

In some embodiments, the second indication information is used to indicate that the MO data is successfully delivered to the core network.

In some embodiments, the determination unit is further configured to: when the second indication information received by the terminal device indicates an acknowledgement, determine that the MO data is successfully delivered to the core network; or
In some embodiments, the determination unit is further configured to:
when the terminal device does not receive the second indication information within the first duration, determine that the MO data is failed to be delivered to the core network, and/or determine that the buffered MO data is invalid.

In some embodiments, a starting time of the first duration is a reception time of the first indication information, or a moment when the terminal device sends the MO data for a first time or for a last time.

In some embodiments, the second indication information is determined based on third indication information sent by the core network, and the third indication information is used to indicate whether the core network successfully receives the MO data.

FIG. 18 is a schematic diagram of a composition structure of a first satellite according to an embodiment of the present disclosure. As illustrated in FIG. 18, the first satellite 1800 includes a second communication unit 1801.

The second communication unit 1801 is configured to send first indication information to a terminal device, where the first indication information is used to determine that the first satellite successfully receives MO data sent by the terminal device, and a store-and-forward mode of the first satellite is used for transmission of the MO data; where the MO data buffered by the terminal device is cleared in following cases: the terminal device determines that the MO data is successfully delivered to a core network and/or the buffered MO data is invalid.

In some embodiments, the first indication information is included in a first message, and the first message includes one of the followings:
a first Radio Resource Control (RRC) message;
a physical layer Hybrid Automatic Repeat-reQuest (HARQ) message;
a radio link control layer Automatic Repeat-reQuest (ARQ) message; and
a Packet Data Convergence Protocol (PDCP) layer acknowledgement message.
In some embodiments, the first RRC message includes one of the followings:
an RRC early data completion message; an RRC connection release message; an RRC connection reject message; an RRC connection set up message; an RRC connection resume message; an RRC release message; an RRC reject message; an RRC set up message; and an RRC resume message, and a preset RRC message.

In some embodiments, the second communication unit 1801 is configured to send second indication information to the terminal device, where the second indication information is used for the terminal device to determine that the MO data is successfully delivered to the core network and/or the buffered MO data is invalid.

In some embodiments, the first indication information is carried on the first service link, and the second indication information is carried on a second service link. The first service link is a link between the terminal device and the first satellite; and the second service link is a re-communicated link between the terminal device and the first satellite.

In some embodiments, the second indication information is included in a second message, and the second message includes one of the followings:
a first paging message; and a second RRC message.

In some embodiments, if the second message includes the second RRC message, and the method further includes one of the followings:
the first satellite receives the MO data sent by the terminal device.
the first satellite receives a third message, where the third message is a message in an RRC connection set up procedure or an RRC connection resume procedure initiated by the terminal device.

In some embodiments, the second communication unit 1801 is further configured to send a third paging message to the terminal device.

In some embodiments, the second RRC message includes one of the followings:
an RRC early data completion message; an RRC connection release message; an RRC connection reject message; an RRC connection set up message; an RRC connection resume message; an RRC release message; an RRC reject message; an RRC connection message; and an RRC resume message.

In some embodiments, the second indication information is used to indicate whether the MO data is successfully delivered to the core network.

In some embodiments, the second indication information indicating an acknowledgement is used to determine that the MO data is successfully delivered to the core network; or the second indication information indicating a negative acknowledgement is used to determine that the MO data is failed to be delivered to the core network.

In some embodiments, the first satellite does not send the second indication information to the terminal device, which is used to determine that:
the MO data is successfully delivered to the core network; or
the MO data is failed to be delivered to the core network, and/or the buffered MO data is invalid.

In some embodiments, the second indication information is used to indicate that the MO data is successfully delivered to the core network.

In some embodiments, the second indication information indicating an acknowledgement is used to determine that the MO data is successfully delivered to the core network.

In some embodiments, if the first satellite does not send the second indication information to the terminal device, it is determined that: the MO data is failed to be delivered to the core network and/or the buffered MO data is invalid.

In some embodiments, the second communication unit 1801 is further configured to:
[0472] receive third indication information sent by the core network, where the third indication information is used to indicate whether the core network successfully receives the MO data; and
[0473] determine the second indication information based on the third indication information.

In some embodiments, the second indication information is included in a fourth paging message sent by the core network to the first satellite.

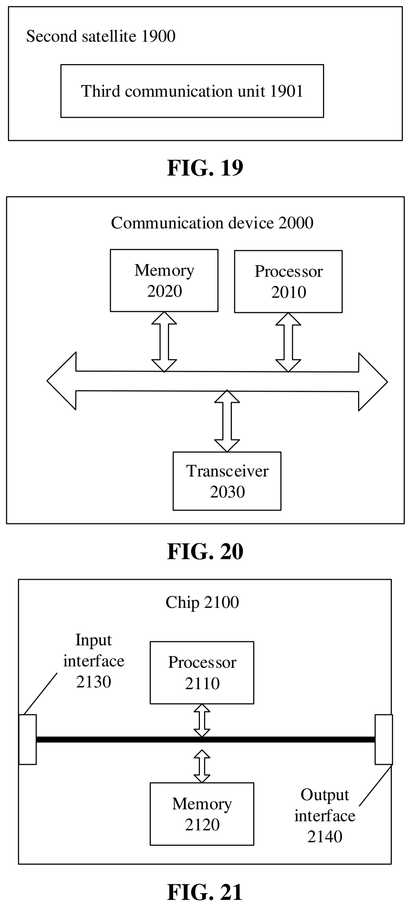

FIG. 19 is a schematic diagram of a composition structure of a second satellite according to an embodiment of the present disclosure. As illustrated in FIG. 19, the second satellite 1900 includes a third communication unit 1901.

The third communication unit 1901 is configured to send second indication information to a terminal device, where the second indication information is used for the terminal device to determine that the MO data is successfully delivered to the core network and/or the buffered MO data is invalid, where the MO data buffered in the terminal device is cleared in a case where the MO data is successfully delivered to a core network and/or the buffered MO data is invalid.

In some embodiments, the second indication information is carried on a second service link, and the second service link is a link between the terminal device and the second satellite; and
In some embodiments, the second indication information is included in a second message, and the second message includes one of the followings:
a first paging message; and a second RRC message.

In some embodiments, if the second message includes the second RRC message, and the method further includes one of the followings:
the second satellite receives the MO data sent by the terminal device; and
the second satellite receives a third message, where the third message is a message in an RRC connection set up procedure or an RRC connection resume procedure initiated by the terminal device.

In some embodiments, the third communication unit 1801 is further configured to send a third paging message to the terminal device.

In some embodiments, the second RRC message includes one of the followings: an RRC early data completion message; an RRC connection release message; an RRC connection reject message; an RRC connection set up message; an RRC connection resume message; an RRC release message; an RRC reject message; an RRC connection message; and an RRC resume message.

In some embodiments, the second indication information is used to indicate whether the MO data is successfully delivered to the core network.

In some embodiments, the second indication information indicating an acknowledgement is used to determine that the MO data is successfully delivered to the core network; or the second indication information indicating a negative acknowledgement is used to determine that the MO data is failed to be delivered to the core network.

In some embodiments, the second satellite does not send the second indication information to the terminal device, which is used to determine that:
the MO data is successfully delivered to the core network; or
the MO data is failed to be delivered to the core network, and/or the buffered MO data is invalid.

In some embodiments, the second indication information is used to indicate that the MO data is successfully delivered to the core network.

In some embodiments, the second indication information indicating an acknowledgement is used to determine that the MO data is successfully delivered to the core network.

In some embodiments, if the second satellite does not send the second indication information to the terminal device, it is determined that: the MO data is failed to be delivered to the core network and/or the buffered MO data is invalid.

In some embodiments, the third communication unit is further configured to:
receive third indication information sent by the core network, where the third indication information is used to indicate whether the core network successfully receives the MO data.
determine the second indication information based on the third indication information.

In some embodiments, the third indication information is included in a fourth paging message sent by the core network to the second satellite.

Those skilled in the art will appreciate that the related descriptions of the terminal device, the first satellite or the second satellite in the embodiments of the present disclosure may be understood with reference to the descriptions of the method for wireless communication in the aforementioned embodiments of the present disclosure.

FIG. 20 is a schematic structural diagram of a communication device 2000 according to an embodiment of the present disclosure. The communication device may be a terminal device or a network device. The communication device 2000 illustrated in FIG. 20 includes a processor 2010. The processor 2010 may be configured to invoke and execute a computer program stored in a memory to perform the methods according to the embodiments of the present disclosure.

Optionally, as illustrated in FIG. 20, the communication device 2000 may further include a memory 2020. Herein, the processor 2010 may be configured to invoke and execute the computer program stored in the memory 2020 to perform the methods according to the embodiments of the present disclosure.

Herein, the memory 2020 may be a separate device independent of the processor 2010, or may be integrated into the processor 2010.

Optionally, as illustrated in FIG. 20, the communication device 2000 may further include a transceiver 2030. The processor 2010 may control the transceiver 2030 to communicate with other devices. Specifically, the transceiver 2030 may transmit information or data to other devices, or receive information or data from other devices.

Herein, the transceiver 2030 may include a transmitter and a receiver. The transceiver 2030 may further include antennas, and the number of the antennas may be one or more.

Optionally, the communication device 2000 may specifically be the first satellite or the second satellite in the embodiments of the present disclosure. The communication device 2000 may implement corresponding processes that are implemented by the first satellite or the second satellite in each of the methods in the embodiments of the present disclosure. For brevity, details are not elaborated herein again.

Optionally, the communication device 2000 may specifically be the mobile terminal/terminal device in the embodiments of the present disclosure. The communication device 2000 may implement corresponding processes that are implemented by the mobile terminal/terminal device in each of the methods in the embodiments of the present disclosure. For brevity, details are not elaborated herein again.

FIG. 21 is a schematic structural diagram of a chip according to an embodiment of the present disclosure. The chip 2100 illustrated in FIG. 21 includes a processor 2110. The processor 2110 may be configured to invoke and execute a computer program stored in a memory to perform the methods according to the embodiments of the present disclosure.

Optionally, as illustrated in FIG. 21, the chip 2100 may further include a memory 2120. Herein, the processor 2110 may be configured to invoke and execute the computer program stored in the memory 2120 to perform the methods according to the embodiments of the present disclosure.

Herein, the memory 2120 may be a separate device independent of the processor 2110, or may be integrated into the processor 2110.

Optionally, the chip 2100 may further include an input interface 2130. Herein, the processor 2110 may control the input interface 2130 to communicate with other devices or chips. Specifically, the input interface 2130 may obtain information or data from other devices or chips.

Optionally, the chip 2100 may further include an output interface 2140. Herein, the processor 2110 may control the output interface 2140 to communicate with other devices or chips. Specifically, the output interface 2140 may output information or data to other devices or chips.

Optionally, the chip may be applied to the first satellite or the second satellite in the embodiments of the present disclosure. The chip may implement the corresponding processes implemented by the first satellite or the second satellite in each of the methods in the embodiments of the present disclosure. For brevity, details are not elaborated herein again.

Optionally, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not elaborated herein again.

It is to be understood that, the chip referred to in the embodiments of the present disclosure may also be referred to as a system-level chip, a system chip, a chip system, or a system-on-chip, etc.

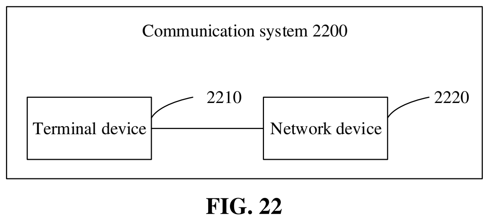

FIG. 122 is a schematic block diagram of a communication system 1500 according to an embodiment of the present disclosure. As illustrated in FIG. 22, the communication system 2200 may include a terminal device 2210 and a network device 2220.

Herein, the terminal device 2210 may be configured to implement the corresponding functions implemented by the terminal device in the foregoing methods. The network device 2220 may be configured to implement the corresponding functions implemented by the first satellite or the second satellite in the foregoing methods. For brevity, details are not elaborated herein again.

It is to be understood that the processor in the embodiments of the present disclosure may be an integrated circuit chip having a signal processing capability. During an implementation process, various operations in the aforementioned method embodiments may be implemented by using an integrated logic circuit in a hardware in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It is to be noted that the memory of the system and methods described herein is intended to include, but not be limited to, memories of these and any other suitable types.

It is to be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

Optionally, the computer-readable storage medium may be applied to the first satellite or the second satellite in the embodiments of the present disclosure, and the computer program causes a computer to perform the corresponding processes performed by the first satellite or the second satellite in various methods of the embodiments of the present disclosure. For brevity, details are not elaborated herein again.

Optionally, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not elaborated herein again.

An embodiment of the present disclosure further provides a computer program product, which includes computer program instructions.

Optionally, the computer program product may be applied to the first satellite or the second satellite in the embodiments of the present disclosure, and the computer program instructions cause a computer to perform the corresponding processes performed by the first satellite or the second satellite in various methods of the embodiments of the present disclosure. For brevity, details are not elaborated herein again.

Optionally, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not elaborated herein again.

An embodiment of the present disclosure further provides a computer program.

Optionally, the computer program may be applied to the first satellite or the second satellite in the embodiments of the present disclosure, and the computer program, when is run on a computer, causes the computer to perform the corresponding processes performed by the first satellite or the second satellite in various methods of the embodiments of the present disclosure. For brevity, details are not elaborated herein again

Optionally, the computer program may be applied to the mobile terminal/terminal device in the embodiments of the present disclosure, and the computer program, when is run on a computer, causes the computer to perform the corresponding processes performed by the mobile terminal/terminal device in various methods of the embodiments of the present disclosure. For brevity, details are not elaborated herein again
Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description
In several embodiments provided herein, it should be understood that the disclosed systems, apparatuses, and methods may be implemented in other ways. For example, the aforementioned apparatus embodiments are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for wireless communication, comprising:
receiving, by a terminal device, first indication information, wherein the first indication information is used to determine that a first satellite successfully receives Mobile Originated (MO) data sent by the terminal device, and a store-and-forward mode of the first satellite is used for transmission of the MO data; and
buffering, by the terminal device, the MO data, wherein the buffered MO data is cleared in following cases: the terminal device determines that the MO data is successfully delivered to a core network and/or the buffered MO data is invalid.

2. The method of claim 1, wherein the first indication information is carried in a first message, and the first message comprises one of:
a first Radio Resource Control (RRC) message;
a physical layer Hybrid Automatic Repeat-reQuest (HARQ) message;
a radio link control layer Automatic Repeat-reQuest (ARQ) message; and
a Packet Data Convergence Protocol (PDCP) layer acknowledgement message.

3. The method of claim 2, wherein the first RRC message comprises one of:
an RRC early data completion message;
an RRC connection release message;
an RRC connection reject message;
an RRC connection set up message;
an RRC connection resume message;
an RRC release message;
an RRC reject message;
an RRC set up message;
an RRC resume message;
a preset RRC message.

4. The method of any one of claims 1 to 3, further comprising:
determining, by the terminal device based on second indication information, that the MO data is successfully delivered to the core network and/or the buffered MO data is invalid.

5. The method of claim 4, wherein
the first indication information is carried on a first service link, and the second indication information is carried on a second service link.

6. The method of claim 5, wherein
the first service link is a link between the terminal device and the first satellite; and
the second service link is a re-communicated link between the terminal device and the first satellite, or a link between the terminal device and a second satellite.

7. The method of any one of claims 4 to 6, wherein the second indication information is comprised in a second message, and the second message comprises one of:
a first paging message; and
a second RRC message.

8. The method of claim 7, wherein if the second message comprises the second RRC message, and the method further comprises one of:
sending, by the terminal device, the MO data; and
initiating, by the terminal device, an RRC connection set up procedure or an RRC connection resume procedure.

9. The method of claim 8, further comprising:
receiving, by the terminal device, a third paging message.

10. The method of any one of claims 7 to 9, wherein the second RRC message comprises one of:
an RRC early data completion message;
an RRC connection release message;
an RRC connection reject message;
an RRC connection set up message;
an RRC connection resume message;
an RRC release message;
an RRC reject message;
an RRC connection message;
an RRC resume message.

11. The method of any one of claims 4 to 10, wherein the second indication information is used to indicate whether the MO data is successfully delivered to the core network.

12. The method of claim 11, further comprising:
when the second indication information received by the terminal device indicates an acknowledgement, determining, by the terminal device, that the MO data is successfully delivered to the core network; or
when the second indication information received by the terminal device indicates a negative acknowledgement, determining, by the terminal device, that the MO data is failed to be delivered to the core network.

13. The method of claim 11, further comprising:
when the terminal device receives no second indication information within a first duration,
determining, by the terminal device, that the MO data is successfully delivered to the core network; or
determining, by the terminal device, that the MO data is failed to be delivered to the core network, and/or determining, by the terminal device, that the buffered MO data is invalid.

14. The method of any one of claims 4 to 10, wherein the second indication information is used to indicate that the MO data is successfully delivered to the core network.

15. The method of claim 14, further comprising:
when the second indication information received by the terminal device indicates an acknowledgement, determining, by the terminal device, that the MO data is successfully delivered to the core network.

16. The method of claim 14, further comprising:
when the terminal device receives no second indication information within a first duration,
determining, by the terminal device, that the MO data is failed to be delivered to the core network, and/or determining, by the terminal device, that the buffered MO data is invalid.

17. The method of claim 13 or 16, wherein a starting time of the first duration is a reception time of the first indication information, or a moment when the terminal device sends the MO data for a first time or for a last time.

18. The method of any one of claims 4 to 17, wherein the second indication information is determined based on third indication information sent by the core network, and the third indication information is used to indicate whether the core network successfully receives the MO data.

19. A method for wireless communication, comprising:
sending, by a first satellites, first indication information to a terminal device, wherein the first indication information is used to determine that the first satellite successfully receives Mobile Originated (MO) data sent by the terminal device, and a store-and-forward mode of the first satellite is used for transmission of the MO data; wherein the MO data buffered by the terminal device is cleared in following cases: the terminal device determines that the MO data is successfully delivered to a core network and/or the buffered MO data is invalid.

20. The method of claim 19, wherein the first indication information is comprised in a first message, and the first message comprises one of:
a first Radio Resource Control (RRC) message;
a physical layer Hybrid Automatic Repeat-reQuest (HARQ) message;
a radio link control layer Automatic Repeat-reQuest (ARQ) message; and
a Packet Data Convergence Protocol (PDCP) layer acknowledgement message.

21. The method of claim 20, wherein the first RRC message comprises one of:
an RRC early data completion message;
an RRC connection release message;
an RRC connection reject message;
an RRC connection set up message;
an RRC connection resume message;
an RRC release message;
an RRC reject message;
an RRC set up message;
an RRC resume message;
a preset RRC message.

22. The method of any one of claims 19 to 21, further comprising:
sending, by the first satellite, second indication information to the terminal device, wherein the second indication information is used for the terminal device to determine that the MO data is successfully delivered to the core network and/or the buffered MO data is invalid.

23. The method of claim 22, wherein
the first indication information is carried on a first service link, and the second indication information is carried on a second service link, the first service link is a link between the terminal device and the first satellite; and the second service link is a re-communicated link between the terminal device and the first satellite.

24. The method of any one of claims 22 to 23, wherein the second indication information is comprised in a second message, and the second message comprises one of:
a first paging message; and
a second RRC message.

25. The method of claim 24, wherein if the second message comprises the second RRC message, and the method further comprises one of:
receiving, by the first satellite, the MO data sent by the terminal device.
receiving, by the first satellite, a third message, wherein the third message is a message in an RRC connection resume procedure or an RRC connection set up procedure initiated by the terminal device.

26. The method of claim 25, further comprising:
sending, by the first satellite, a third paging message to the terminal device.

27. The method of any one of claims 24 to 26, wherein the second RRC message comprises one of:
an RRC early data completion message;
an RRC connection release message;
an RRC connection reject message;
an RRC connection set up message;
an RRC connection resume message;
an RRC release message;
an RRC reject message;
an RRC connection message; and
an RRC resume message.

28. The method of any one of claims 22 to 27, wherein the second indication information is used to indicate whether the MO data is successfully delivered to the core network.

29. The method of claim 28, wherein
the second indication information indicating the acknowledgement is used to determine that the MO data is successfully delivered to the core network; or
the second indication information indicating the negative acknowledgement is used to determine that the MO data is failed to be delivered to the core network.

30. The method of claim 28, wherein if the first satellite sends no second indication information to the terminal device, it is determined that:
the MO data is successfully delivered to the core network; or
the MO data is failed to be delivered to the core network, and/or the buffered MO data is invalid.

31. The method of any one of claims 22 to 27, wherein the second indication information is used to indicate that the MO data is successfully delivered to the core network.

32. The method of claim 31, wherein the second indication information indicating an acknowledgement is used to determine that the MO data is successfully delivered to the core network.

33. The method of claim 32, wherein if the first satellite sends no second indication information to the terminal device, it is determined that: the MO data is failed to be delivered to the core network and/or the buffered MO data is invalid.

34. The method of any one of claims 22 to 33, further comprising:
receiving, by the first satellite, third indication information sent by the core network, wherein the third indication information is used to indicate whether the core network successfully receives the MO data.
determining, by the first satellite, the second indication information based on the third indication information.

35. The method of claim 34, wherein the second indication information is comprised in a fourth paging message sent by the core network to the first satellite.

36. A method for wireless communication, comprising:
sending, by a second satellite, second indication information to a terminal device, wherein the second indication information is used for the terminal device to determine that Mobile Originated (MO) data is successfully delivered to a core network and/or buffered MO data is invalid, wherein the MO data buffered in the terminal device is cleared in a case where it is determined that the MO data is successfully delivered to the core network and/or it is determined that the buffered MO data is invalid.

37. The method of claim 36, wherein
the second indication information is carried on a second service link, and the second service link is a link between the terminal device and the second satellite; and

38. The method of any one of claims 36 to 37, wherein the second indication information is comprised in a second message, and the second message comprises one of:
a first paging message; and
a second Radio Resource Control (RRC) message.

39. The method of claim 38, wherein if the second message comprises the second RRC message, and the method further comprises one of:
receiving, by the second satellite, the MO data sent by the terminal device.
receiving, by the second satellite, a third message, wherein the third message is a message in an RRC connection resume procedure or an RRC connection set up procedure initiated by the terminal device.

40. The method of claim 39, further comprising:
sending, by the second satellite, a third paging message to the terminal device.

41. The method of any one of claims 38 to 40, wherein the second RRC message comprises one of:
an RRC early data completion message;
an RRC connection release message;
an RRC connection reject message;
an RRC connection set up message;
an RRC connection resume message;
an RRC release message;
an RRC reject message;
an RRC connection message; and
an RRC resume message.

42. The method of any one of claims 36 to 41, wherein the second indication information is used to indicate whether the MO data is successfully delivered to the core network.

43. The method of claim 42, wherein
the second indication information indicating the acknowledgement is used to determine that the MO data is successfully delivered to the core network; or
the second indication information indicating the negative acknowledgement is used to determine that the MO data is failed to be delivered to the core network.

44. The method of claim 42, wherein if the second satellite sends no second indication information to the terminal device, it is determined that:
the MO data is successfully delivered to the core network; or
the MO data is failed to be delivered to the core network, and/or the buffered MO data is invalid.

45. The method of any one of claims 36 to 41, wherein the second indication information is used to indicate that the MO data is successfully delivered to the core network.

46. The method of claim 45, wherein the second indication information indicating an acknowledgement is used to determine that the MO data is successfully delivered to the core network.

47. The method of claim 46, wherein if the second satellite sends no second indication information to the terminal device, it is determined that: the MO data is failed to be delivered to the core network and/or the buffered MO data is invalid.

48. The method of any one of claims 36 to 47, further comprising:
receiving, by the second satellite, third indication information sent by the core network, wherein the third indication information is used to indicate whether the core network successfully receives the MO data.
determining, by the second satellite, the second indication information based on the third indication information.

49. The method of claim 48, wherein the third indication information is comprised in a fourth paging message sent by the core network to the second satellite.

50. A terminal device comprising:
a first communication unit, configured to receive first indication information, wherein the first indication information is used to determine that a first satellite successfully receives Mobile Originated (MO) data sent by the terminal device, and a store-and-forward mode of the first satellite is used for transmission of the MO data; and
a buffering unit, configured to buffer the MO data, wherein the buffered MO data is cleared in following cases: the terminal device determines that the MO data is successfully delivered to a core network and/or the buffered MO data is invalid.

51. A satellite comprising:
a second communication unit, configured to send first indication information to a terminal device, wherein the first indication information is used to determine that the first satellite successfully receives Mobile Originated (MO) data sent by the terminal device, and a store-and-forward mode of the first satellite is used for transmission of the MO data; wherein the MO data buffered by the terminal device is cleared in following cases: the terminal device determines that the MO data is successfully delivered to a core network and/or the buffered MO data is invalid.

52. A satellite comprising:
a third communication unit, configured to send second indication information to a terminal device, wherein the second indication information is used for the terminal device to determine that Mobile Originated (MO) data is successfully delivered to a core network and/or buffered MO data is invalid, wherein the MO data buffered in the terminal device is cleared in a case where it is determined that the MO data is successfully delivered to the core network and/or it is determined that the buffered MO data is invalid.

53. A terminal device comprising: a processor and a memory, wherein the memory is configured to store a computer program, and the processor is configured to invoke and execute the computer program stored in the memory to perform the method of any one of claims 1 to 18.

54. A satellite comprising: a processor and a memory, wherein the memory is configured to store a computer program, and the processor is configured to invoke and execute the computer program stored in the memory to perform the method of any one of claims 19 to 35 or the method of any one of claims 36 to 49.

55. A chip comprising: a processor configured to invoke and execute the computer program from a memory, to enable a device on which the chip is mounted to perform the method of any one of claims 1 to 18, or the method of any one of claims 19 to 35, or the method of any one of claims 36 to 49.

56. A computer-readable storage medium configured to store a computer program, wherein the computer program causes a computer to perform the method of any one of claims 1 to 18, or the method of any one of claims 19 to 35, or the method of any one of claims 36 to 49.

57. A computer program product comprising computer program instructions, wherein the computer program instructions cause a computer to perform the method of any one of claims 1 to 18, or the method of any one of claims 19 to 35, or the method of any one of claims 36 to 49.

58. A computer program causing a computer to perform the method of any one of claims 1 to 18, or the method of any one of claims 19 to 35, or the method of any one of claims 36 to 49.
